(19) Europäisches Patentamt
European Patent Office
Office européen des brevets

(11) EP 4 275 889 B1

(12) EUROPEAN PATENT SPECIFICATION

(45) Date of publication and mention of the grant of the patent:
**16.10.2024 Bulletin 2024/42**

(21) Application number: **22172876.9**

(22) Date of filing: **12.05.2022**

(51) International Patent Classification (IPC):
***B32B 27/08*** (2006.01) ***B32B 27/32*** (2006.01)
***C08F 210/16*** (2006.01) *C08F 4/659* (2006.01)

(52) Cooperative Patent Classification (CPC):
(C-Sets available)
**C08F 210/16; B32B 27/08; B32B 27/32; B32B 27/327;** B32B 2250/02; B32B 2250/03; B32B 2250/242; B32B 2270/00; B32B 2307/31; B32B 2307/516; B32B 2307/72; B32B 2439/06; B32B 2439/46; B32B 2439/70; B32B 2519/00;

(Cont.)

# (54) ORIENTED MULTILAYERED FILM

AUSGERICHTETER MEHRSCHICHTIGER FILM

FILM MULTICOUCHE ORIENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.11.2023 Bulletin 2023/46**

(73) Proprietor: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **ALABRUNE, Arnaud**
  **92400 Courbevoie (FR)**
- **POTTER, Elisabeth**
  **4021 Linz (AT)**
- **AHO, Jani**
  **06101 Porvoo (FI)**

(74) Representative: **TBK**
**Bavariaring 4-6**
**80336 München (DE)**

(56) References cited:
**WO-A1-2016/025168**
**WO-A1-2017/207221**
**WO-A1-2019/081611**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08F 4/65912; C08F 4/65916; C08F 2420/07

C-Sets
**C08F 210/16, C08F 2/001;**
**C08F 210/16, C08F 4/025;**
**C08F 210/16, C08F 4/6492;**
**C08F 210/16, C08F 4/6555;**
**C08F 210/16, C08F 4/65927;**
C08F 110/02, C08F 2500/07, C08F 2500/12, C08F 2500/26;
C08F 210/16, C08F 210/08, C08F 2500/07, C08F 2500/12, C08F 2500/26;
C08F 210/16, C08F 210/08, C08F 2500/12, C08F 2500/26;
C08F 210/16, C08F 210/14, C08F 210/08, C08F 2500/12, C08F 2500/26;
C08F 210/16, C08F 210/14, C08F 2500/12, C08F 2500/26, C08F 2500/27, C08F 2500/36

## Description

The present invention relates to an uniaxially oriented multilayer film comprising at least two layers (A), being skin layers (SKL), and one layer (B), with a beneficial combination of mechanical, e.g. tensile modulus, and optical properties. In particular, the invention relates to an uniaxially oriented multilayer film comprising at least two skin layers (SKL) based on a specific multimodal metallocene catalysed HDPE and a layer (B) based on a multimodal Ziegler-Natta catalysed linear low density polyethylene.

Polymer films are widely used in packaging. These films must obviously protect the contents of the package from damage and the environment.

Especially polyethylene based films are widely used in packaging due to their excellent cost/performance ratios. However, due to increasing demands on the needs of the films, multilayer packaging is typically employed utilising different types of polymers.

One classical combination are polyester (e.g.PET)-polyolefin laminates. Whilst these can offer attractive properties, the recycling of such materials is difficult. Therefore, making the materials pure is preferred. In that manner, a packaging with 'mono-materials' is really appreciated. However, this imposes higher requirements on the performance of materials themselves. There is thus a need to produce multilayer films, which offer the opportunity for facile recycling, together with an attractive balance of properties, e.g. a multilayered material with balanced sealing, stiffness, toughness is highly desirable.

To resolve that problem a machine direction oriented polyethylene (MDO PE) or biaxially oriented polyethylene (BOPE) film can be used to replace the PET film, which is often employed due to its attractive properties. HOPE offers a good alternative to PET in terms of stiffness and thermal resistance. The resulting material comprises polyethylene only and is hence fully mechanically recycled.

WO 2019/108326 describes a multilayer film, comprising a machine direction oriented (MDO) substrate and a sealant, wherein the substrate has at least three layers. The core layer is described to comprise two polyethylenes and at least one of the other layers comprises a third polyethylene.

WO 2018/071250 relates to machine direction oriented polymer films wherein at least one layer comprises an ethylene-based polymer having a particular set of properties.

WO 2017/207221 discloses a recyclable multilayer structure comprising (i) a first polyethylene layer as a first external layer, said first polyethylene layer being oriented in only in the machine direction and is formed from at least three layers; (ii) a second PE external layer; (iii) a core layer made of a copolymer of ethylene and vinyl alcohol (EVOH); and (iv) a tie layer on each side of the EVOH layer, characterised in that the tie layers comprise one or more copolymers of ethylene.

The present inventors have unexpectedly found that an uniaxially oriented film comprising at least two layers (A), being skin layers (SKL-1 and SKL-2), and one layer (B), whereby the skin layers (SKL) are based on specific multimodal metallocene catalysed HDPEs and layer (B) is based on a multimodal Ziegler-Natta catalysed linear low density polyethylene, possess an attractive balance of mechanical, e.g. tensile modulus, and optical properties.

## Summary of Invention

The present invention is therefore directed to an uniaxially oriented multilayered polyethylene film comprising at least two layers (A), being skin layers (SKL-1 and SKL-2), sandwiching a layer (B), being a core layer (CL), wherein

(A) the skin layers (SKL-1 and SKL-2) can be the same or can be different and comprise at least 90.0 wt%, based on the total weight of skin layer, of a multimodal metallocene catalysed high density polyethylene (mHDPE), wherein the multimodal mHDPE has a density (ISO 1183) in the range of 948 to 970 kg/m$^3$ and a MFR$_2$ (190°C, 2.16 kg, ISO 1133) of 0.1 to 3.0 g/10 min and wherein the multimodal mHDPE comprises at least

(i) 30 to 70 wt%, relative to the total weight of the multimodal mHDPE, of a polyethylene component (A) having a density (ISO 1183) in the range of 955 to 980 kg/m$^3$ and a MFR$_2$ (190°C, 2.16 kg, ISO 1133) in the range of 10 to 500 g/10 min; and

(ii) 30 to 70 wt%, relative to the total weight of the multimodal mHDPE, of a polyethylene component (B) being a polyethylene having a density (ISO 1183) in the range of 935 to 965 kg/m$^3$ and a MFR$_2$ (190°C, 2.16 kg, ISO 1133) in the range of 0.0001 to 1.0 g/10 min; and wherein

(B) the core layer (CL) comprises:

a) 50.0 wt% to 80.0 wt%, based on the total weight of the core layer (CL), of a multimodal Ziegler-Natta catalysed linear low density polyethylene (znLLDPE) having a density in the range of 925 to 950 kg/m$^3$ (ISO 1183) and

an $MFR_5$ (190°C, 5 kg, ISO 1133) in the range of 0.1 to 6.0 g/10 min; and

b) 20.0 wt% to 50.0 wt%, based on the total weight of the core layer (CL), of a multimodal metallocene catalysed linear low density polyethylene (mLLDPE) having a density in the range of 905 to 930 kg/$m^3$ (ISO 1183), a $MFR_2$ (190°C, 2.16 kg, ISO 1133) in the range of from 0.01 to 1.5 g/10 min and a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 80.

Advantageous embodiments of the uniaxially oriented multilayered film in accordance with the present invention are specified in the dependent claims 2 to 14. The present invention further relates in accordance with claim 15 to the use of the article according to the present invention as packaging material.

## Definitions

A metallocene-catalysed (linear low density or high density) polyethylene is defined in this invention as a (linear low density or high density) polyethylene copolymer, which has been produced in the presence of a metallocene catalyst.

A Ziegler-Natta-catalysed linear low density polyethylene is defined in this invention as a linear low density polyethylene copolymer, which has been produced in the presence of a Ziegler-Natta catalyst.

For the purpose of the present invention the metallocene-catalysed and the Ziegler-Natta catalysed linear low density polyethylene may consist of a polymer component (A) and a polymer component (B) which means that the polymer is produced in an at least 2-stage sequential polymerization process, wherein first component (A) is produced and component (B) is then produced in the presence of component (A) in a subsequent polymerization step, yielding the metallocene-catalysed or the Ziegler-Natta catalysed (linear low) density polyethylene or vice versa, i.e. first component (B) is produced and component (A) is then produced in the presence of component (B) in a subsequent polymerization step, yielding the metallocene-catalysed or Ziegler-Natta catalysed (linear low density) polyethylene.

For the purpose of the present invention "high density polyethylene (HDPE) which comprises polyethylene component (A) and polyethylene component (B)" means that the HDPE is produced in an at least 2-stage sequential polymerization process, wherein first component (A) is produced and component (B) is then produced in the presence of component (A) in a subsequent polymerization step, yielding the HDPE or vice versa, i.e. first component (B) is produced and component (A) is then produced in the presence of component (B) in a subsequent polymerization step, yielding the HDPE.

Polyethylenes produced in a multistage process are also designated as "in-situ" or "reactor" blends. The resulting end product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture.

The term "multimodal" in context of multimodal metallocene-catalysed (linear low density or high density) polyethylene or Ziegler-Natta-catalysed (linear low density) polyethylene means herein multimodality with respect to melt flow rate (MFR) of at least the polyethylene components (A) and (B), i.e. the polyethylene components (A) and (B), have different MFR values. The multimodal polyethylenes can have further multimodality between the polyethylene components (A) and (B) with respect to one or more further properties, like density, comonomer type and/or comonomer content, as will be described later below.

A homopolymer in the context of the present invention may comprise up to 1.0 wt% based on the total weight of the homopolymer of comonomers, preferably up to 0.5 wt%, but may be also free of comonomers.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

## Detailed Description of Invention

The uniaxially oriented multilayered polyethylene film according to the present invention comprises at least two layers (A), being skin layers (SKL-1 and SKL-2), sandwiching a layer (B), being a core layer (CL).

*(A) skin layers (SKL-1 and SKL-2)*

The skin layers of the film according to the present invention comprise a multimodal metallocene catalysed high density polyethylene (mHDPE).

The multimodal mHDPE has a density (ISO 1183) in the range of 948 to 970 kg/$m^3$ and a $MFR_2$ (190°C, 2.16 kg, ISO 1133) in the range of 0.1 to 3.0 g/10 min and wherein the multimodal mHDPE comprises at least

(i) 30 to 70 wt%, relative to the total weight of the multimodal mHDPE, of a polyethylene component (A) having a density (ISO 1183) in the range of 955 to 980 kg/$m^3$ and a $MFR_2$ (190°C, 2.16 kg, ISO 1133) in the range of 10 to 500 g/10 min; and

(ii) 30 to 70 wt%, relative to the total weight of the multimodal mHDPE, of a polyethylene component (B) being a polyethylene having a density (ISO 1183) in the range of 935 to 965 kg/$m^3$ and a $MFR_2$ (190°C, 2.16 kg, ISO 1133) in the range of 0.0001 to 1.0 g/10 min.

The multimodal metallocene catalysed high density polyethylene (mHDPE) may be a homopolymer or a copolymer, but is preferably an ethylene copolymer. By ethylene homopolymer is meant a polymer comprising at least 99.0 wt%, especially at least 99.5 wt% ethylene monomer units. Thus, the ethylene homopolymer may comprise up to 1.0 wt% comonomer units, but preferably comprises only up to 0.5 wt%, like up to 0.2 wt% or even up to 0.1 wt% only. By ethylene copolymer is meant a polymer the majority by weight of which derives from ethylene monomer units (i.e. at least 50.0 wt% ethylene relative to the total weight of the copolymer). The comonomer contribution preferably is up to 10.0 wt%, more preferably up to 5.0 wt%.

The other copolymerizable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene and 4-methyl-pent-1-ene. The use of 1-hexene, 1-octene and 1-butene, or mixtures thereof, is particularly preferred, especially 1-hexene and/or 1-butene.

The mHDPE of the invention is multimodal and therefore comprises at least two components. The mHDPE is preferably bimodal. The polymer of the invention thus preferably comprises

(i) a polyethylene component (A) being a lower molecular weight ethylene homo- or copolymer component, and

(ii) a polyethylene component (B) being a higher molecular weight ethylene homo- or copolymer component.

Higher molecular weight hereby means that component (B) has a higher molecular weight and thus lower $MFR_2$ than component (A).

Lower molecular weight hereby means that component (A) has a lower molecular weight and thus higher $MFR_2$ than component (B).

The multimodal mHDPE used according to the present invention has a $MFR_2$ (190°C, 2.16 kg, ISO 1133) of 0.1 to 3.0 g/10 min.

Preferably, the mHDPE has a $MFR_2$ of 2.5 g/10 min or less, more preferably 2.0 g/10 min or less and even more preferably 1.5 g/10 min or less. The polymer preferably has a minimum $MFR_2$ of 0.3 g/10min, such as at least 0.5 g/10 min, more preferably at least 0.6 g/10 min. Thus, particularly suitable ranges of $MFR_2$ are from 0.3 to 2.5 g/10 min, such as 0.5 to 2.0 g/10 min or 0.6 to 1.5 g/10 min.

The $MFR_{21}$ (190°C, 21.6 kg, ISO 1133) of the multimodal mHDPE is preferably in the range of 15 to 80 g/10min, more preferably in the range of 20 to 60 g/10 min and most preferably 25 to 40 g/10 min.

The multimodal mHDPE used according to the present invention furthermore preferably has a Flow Rate Ratio (FRR) of the $MFR_{21}/MFR_2$ of at least 26.0, more preferably of at least 28.0 and even more preferably of at least 30.0.

Preferably, the Flow Rate Ratio (FRR) of the $MFR_{21}/MFR_2$ is up to 80.0, more preferably up to 70.0 and even more preferably up to 50.0.

Thus, suitable ranges for the FRR are at least 26.0 to 80.0, preferably at least 28.0 to 70.0 and more preferably at least 30.0 to 50.0.

Additionally, the multimodal mHDPE used according to the present invention has a density in the range of 948 to 970 kg/$m^3$, preferably of 950 to 965 kg/m3 and more preferably of 952 to 960 kg/$m^3$.

The multimodal mHDPE used according to the present invention comprises at least a lower molecular weight component (A) and a higher molecular weight component (B).

In one particularly preferable embodiment, the mHDPE consists of polyethylene components (A) and (B).

The weight ratio of component (A) to component (B) in the multimodal mHDPE is in the range 30:70 to 70:30, preferably 35:65 to 65:35, more preferably 40:60 to 60:40. In some embodiments the ratio may be 35 to 50 wt% of component (A) and 50 to 65 wt% of component (B), such as 40 to 50 wt% of component (A) and 50 to 60 wt% of component (B), wherein the wt% values are relative to the total weight of the multimodal mHDPE.

In a particularly preferred embodiment, the wt% values for the polyethylene components (A) and (B) add up to 100 %.

Each component (A) and component (B) may be an ethylene homopolymer or an ethylene copolymer. The terms "ethylene homopolymer" and "ethylene copolymer" are as defined above.

In a preferred embodiment, the polyethylene component (A) is an ethylene copolymer and component (B) is an ethylene homopolymer.

Preferably, polyethylene component (B) consists of a single ethylene homopolymer. Polyethylene component (A) may consist of a single ethylene copolymer. Alternatively, Polyethylene component (A) may be an ethylene copolymer mixture comprising (e.g. consisting of) a first ethylene copolymer fraction (A-1) and a second ethylene copolymer fraction (A-2). Polyethylene component (A) may be unimodal or multimodal. In case polyethylene component (A) is an ethylene copolymer mixture, it is preferable if the comonomer(s) in the first and second ethylene copolymer fractions are the same.

The polyethylene component (A) preferably has a $MFR_2$ in the range of 10 to 400 g/10min, more preferably 12 to 200 g/10min, even more preferably 15 to 100 g/10min and most preferably 20 to 50 g/10 min.

The density of the polyethylene component (A) preferably is in the range of 955 to 970 kg/$m^3$, more preferably 958 to 968 kg/$m^3$ and even more preferably 960 to 965 kg/$m^3$.

As stated above, in one preferred embodiment the polyethylene component (A) is an ethylene copolymer. Preferred ethylene copolymers employ alpha-olefins (e.g. C3-12 alpha-olefins) as comonomers. Examples of suitable alpha-olefins include 1-butene, 1-hexene and 1-octene. 1-butene is an especially preferred comonomer.

In another embodiment it is further preferred that polyethylene component (A) consists of two fractions, i.e. a first ethylene copolymer fraction (A-1) and a second ethylene copolymer fraction (A-2).

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably, fraction (A-1) is produced first.

The $MFR_2$ and/or the density of fractions (A-1) and (A-2) may be the same or may be different from each other.

Thus, the ethylene polymer fraction (A-1) preferably has a $MFR_2$ (190°C, 2.16 kg, ISO 1133) in the range of 1.0 to 500.0 g/10 min, preferably of 5.0 to 200.0 g/10 min, more preferably of 8.0 to 100.0 g/10 min and even more preferably of 10.0 to 50.0 g/10 min.

The ethylene polymer fraction (A-2) preferably has a $MFR_2$ (190°C, 2.16 kg, ISO 1133) in the range of 10.0 to 500.0 g/10 min, preferably of 15.0 to 200.0 g/10 min, more preferably of 20.0 to 100.0 g/10 min and most preferably of 25.0 to 60.0 g/10 min.

Preferably, the $MFR_2$ of fraction (A-2) is higher than the $MFR_2$ of fraction (A-1).

The density of the ethylene polymer fraction (A-1) preferably is in the range of 945 to 970 kg/$m^3$, more preferably 950 to 965 kg/$m^3$ and even more preferably 952 to 962 kg/$m^3$.

The ethylene polymer fraction (A-2) preferably has a density in the range of 950 to 980 kg/$m^3$, more preferably 955 to 975 kg/$m^3$ and even more preferably 960 to 970 kg/$m^3$.

Preferably, the density of fraction (A-2) is higher than the density of fraction (A-1).

The polyethylene component (B) preferably has a $MFR_2$ in the range of 0.001 to 0.8 g/10min, more preferably of 0.01 to 0.6 g/10min, and even more preferably of 0.03 to 0.2 g/10min. The density of the polyethylene component (B) preferably is in the range of 945 to 965 kg/$m^3$, more preferably 948 to 962 kg/$m^3$ and even more preferably 950 to 960 kg/$m^3$.

As stated above polyethylene component (B) preferably is an ethylene homopolymer.

The multimodal mHDPE may be produced by polymerization using conditions which create a multimodal (e.g. bimodal) polymer product using a metallocene catalyst system.

Thus, the multimodal mHDPE can be produced in a 2-stage process, preferably comprising a slurry reactor (loop reactor), whereby the slurry (loop) reactor is connected in series to a gas phase reactor (GPR), whereby either polyethylene component (A) or polyethylene component (B) is produced in the loop reactor and the other ethylene polymer component is then produced in GPR in the presence of the first produced ethylene polymer component to produce the multimodal mHDPE, preferably the polyethylene component (A) is produced in the loop reactor and the polyethylene component (B) is produced in GPR in the presence of the polyethylene component (A) to produce the multimodal mHDPE.

The first polymerization stage is preferably a slurry polymerization step.

The slurry polymerization usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amounts of methane, ethane and/or butane.

The temperature in the first polymerization stage is preferably from 60 to 100°C, preferably from 80 to 100°C. The pressure is generally from 1 to 150 bar, preferably from 40 to 80 bar. The slurry polymerization may be conducted in any known reactor used for slurry polymerization. Such reactors include a continuous stirred tank reactor and a loop

reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor. The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the $MFR_2$ of the resultant polymer. The amount of hydrogen needed to reach the desired MFR depends on the catalyst used and the polymerization conditions.

In the second polymerization stage, ethylene is polymerized in the presence of the catalyst and the ethylene polymer produced in the first polymerization stage. It will thus be appreciated that the second polymerization stage generates an ethylene polymer, which combines with the ethylene polymer from the first polymerization stage, to form the multimodal mHDPE of the present invention.

The second polymerization stage is preferably a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

In case that the polyethylene component (A) of the multimodal mHDPE consists of ethylene polymer fractions (A-1) and (A-2), the multimodal mHDPE can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably, fraction (A-1) is produced first.

The loop reactor 2 is thereby connected in series to a gas phase reactor (GPR), so that the polyethylene component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable multimodal polymers can be found in these references.

A suitable process is the Borstar PE process or the Borstar PE 3G process.

The multimodal mHDPE comprising fractions (A-1) and (A-2) is therefore preferably produced in a loop loop gas cascade.

Such polymerization steps (either loop gas or loop loop gas) may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1.0 to 5.0 wt% in respect to the final metallocene catalysed multimodal mHDPE. This can counted as part of the first polyethylene component (A).

*Catalyst*

The multimodal mHDPE is one made using a metallocene catalyst. A metallocene catalyst comprises a metallocene complex and a cocatalyst. The metallocene compound or complex is referred herein also as organometallic

compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

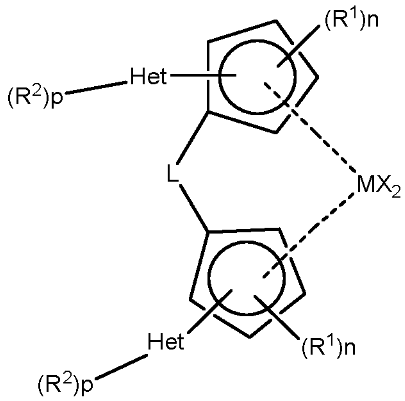

(I)

wherein each X is independently a halogen atom, a C1-6-alkyl group, C1-6-alkoxy group, phenyl or benzyl group;
each Het is independently a monocyclic heteroaromatic group containing at least one heteroatom selected from O or S;
L is -R’2Si-, wherein each R’ is independently C1-20-hydrocarbyl or C1-10-alkyl substituted with alkoxy having 1 to 10 carbon atoms;
M is Ti, Zr or Hf;
each R1 is the same or different and is a C1-6-alkyl group or C1-6-alkoxy group;
each n is 1 to 2;
each R2 is the same or different and is a C1-6-alkyl group, C1-6-alkoxy group or -Si(R)3 group; each R is C1-10-alkyl or phenyl group optionally substituted by 1 to 3 C1-6-alkyl groups; and each p is 0 to 1.

Preferably, the compound of formula (I) has the structure

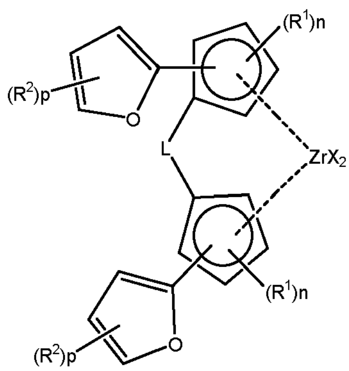

(I´)

wherein each X is independently a halogen atom, a C1-6-alkyl group, C1-6-alkoxy group, phenyl or benzyl group;
L is a Me2Si-;
each R1 is the same or different and is a C1-6-alkyl group, e.g. methyl or t-Bu;
each n is 1 to 2;
R2 is a -Si(R)3 alkyl group; each p is 1; each R is C1-6-alkyl or phenyl group.

Highly preferred complexes of formula (I) are

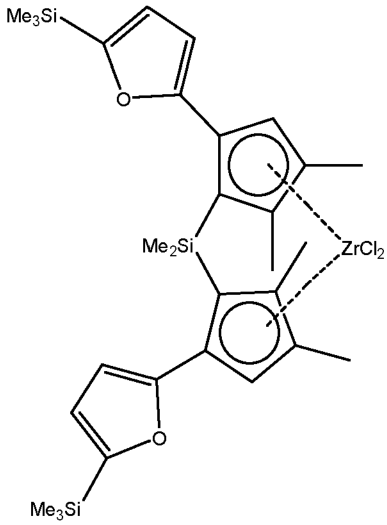

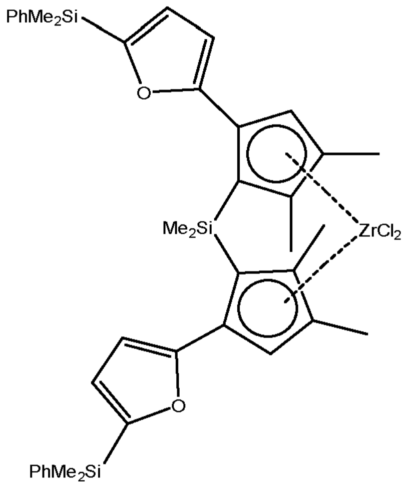

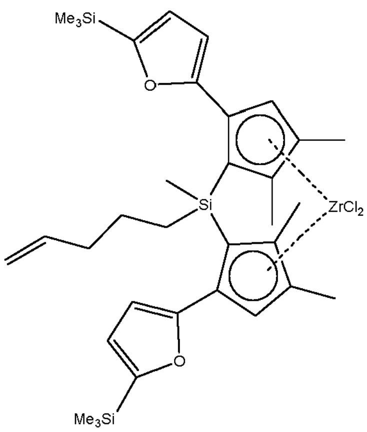

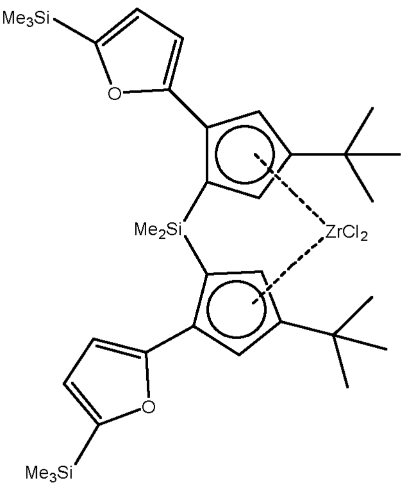

Most preferably the complex dimethylsilanediylbis[2-(5-trimethylsilylfuran-2-yl)-4,5-dimethylcyclopentadien-1-yl] zirconium dichloride is used.

More preferably the polyethylene components (A) and (B) of the multimodal metallocene catalysed high density polyethylene (mHDPE) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred. Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The multimodal mHDPE may contain additives and/or fillers.

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

The two skin layers SKL-1 and SKL-2 may comprise the same mHDPE or different mHDPEs as defined above.

In an embodiment of the invention it is possible that the mHDPE is blended with a low amount, e.g. 1.0 to 10.0 wt%, based on the total weight of the skin layer, of another polyethylene based polymer, like a mLLDPE or a znLLPDE as defined below.

In a preferred embodiment of the present invention both skin layers SKL-1 and SKL-2 comprise the same mHDPE.

In a further preferred embodiment of the present invention, both skin layers SKL-1 and SKL-2 consist of the

same mHDPE only. (i.e. 100 wt% mHDPE related to the total weight of the skin layers).

***(B) core layer (CL)***

The core layer (CL) comprises

a) 50.0 wt% to 80.0 wt%, preferably 55.0 to 75.0 wt% and more preferably 57.0 to 70.0 wt% based on the total weight of the core layer (CL), of a multimodal Ziegler-Natta catalysed linear low density polyethylene (znLLDPE) and
b) 20.0 wt% to 50.0 wt%, preferably 25.0 to 45.0 wt% and more preferably 30.0 to 43.0 wt% based on the total weight of the core layer (CL), of a multimodal metallocene catalysed linear low density polyethylene (mLLDPE).

*Ad multimodal Ziegler-Natta catalysed linear low density polyethylene (znLLDPE)*

The multimodal Ziegler-Natta catalysed linear low density polyethylene (znLLDPE) has a density in the range of 925 to 950 kg/$m^3$ (ISO 1183), preferably from 927 to 948 kg/$m^3$, more preferably from 928 to 945 kg/$m^3$, and even more preferably from 930 to 943 kg/$m^3$.

The $MFR_5$ (190°C, 5 kg, ISO 1133) of the znLLDPE is in the range of 0.1 to 6.0 g/10 min, preferably from 0.3 to 5.0 g/10 min, more preferably from 0.5 to 3.0 g/10 min, and even more preferably from 0.7 to 2.5 g/10 min.

The znLLDPE contains at least one or two comonomer(s). Suitable comonomers are $C_3$-$C_{10}$ alpha-olefin comonomers.

Thus, the znLLDPE can be a copolymer of ethylene and one $C_3$-$C_{10}$ alpha-olefin comonomer or a terpolymer of ethylene and two different $C_3$-$C_{10}$ alpha-olefin comonomers.

Preferably, the comonomers are selected from the group of 1-butene, 1-hexene and 1-octene. It is preferred if the comonomer employed is 1-butene and/or 1-hexene.

More preferred are terpolymers comprising 1-butene and 1-hexene comonomers.

The total comonomer content of the znLLDPE is preferably in the range of from 1.0 to 10.0 wt%, more preferably of from 1.5 to 8.0 wt% and even more preferably of from 2.5 to 7.0 wt%. 1-butene is preferably present in the znLLDPE in an amount of from 0.1 to 3.0 wt%, more preferably of from 0.3 to 2.5 wt%, and even more preferably of from 0.5 to 2.0 wt% and 1-hexene is present in the znLLDPE in an amount of from 0.9 to 7.0 wt%, more preferably of from 1.0 to 6.0 wt% and even more preferably of from 2.0 to 5.0 wt%.

In one embodiment of the present invention, the znLLDPE comprises

(A) a lower molecular weight (LMW) homopolymer of ethylene and
(B) a higher molecular weight (HMW) terpolymer of ethylene, 1-butene and 1-hexene.

The LMW homopolymer fraction (A) has a lower molecular weight than the HMW terpolymer fraction (B).

In a further embodiment of the present invention, the lower molecular weight (LMW) homopolymer of ethylene (A) consists of one or two fractions, i.e. of one or two homopolymers of ethylene.

In case that the lower molecular weight (LMW) homopolymer of ethylene (A) consists of two homopolymers of ethylene, these two fractions are named (A-1) and (A-2).

The lower molecular weight homopolymer (A) of the znLLDPE has a melt index $MFR_2$ according to ISO 1133 (190°C) in the range of from 200 to 1000 g/10min, preferably of from 250 to 800 g/10min and a density according to ISO 1183 in the range of from 940 to 980 kg/$m^3$, preferably 945 to 975 kg/$m^3$.

The amount of the lower molecular weight fraction (A) of the znLLDPE is in the range of 30 to 60 wt%, preferably 35 to 50 wt% and more preferably 35 to 48 wt%.

The expression "homopolymer of ethylene" used herein refers to a polyethylene that consists substantially, i.e. to at least 99.0 wt% and more preferably at least 99.5 wt% by weight, like at least 99.8 wt% of ethylene.

In case that the lower molecular weight (LMW) homopolymer of ethylene (A) consists of two homopolymers of ethylene, i.e. fractions (A-1) and (A-2), these two fractions preferably have a different $MFR_2$ according to ISO 1133 (190°C).

The homopolymer fraction (A-1) preferably has a $MFR_2$ according to ISO 1133 (190°C) in the range of 100 to 400 g/10 min, more preferably in the range of 150 to 300 g/10 min, whereas the homopolymer fraction (A-2) preferably has a $MFR_2$ according to ISO 1133 (190°C) in the range of 450 to 1200 g/10 min, more preferably in the range of 600 to 1100 g/10 min.

The $MFR_2$ of fraction (A-1) is preferably lower than the $MFR_2$ of the total lower molecular weight (LMW) homopolymer of ethylene (A).

According to a preferred embodiment the ratio of $MFR_2$(A)/$MFR_2$(A-1) may be for example between greater than 1 and up to 10, preferably between 1.5 and 5, such as 1.5 to 4. Ideally, the MFR difference between the first and

second homopolymer fraction (A-1) and (A-2) is as high as possible.

Ideally, the MFR difference between the first homopolymer fraction (A-1) and the $MFR_2$ of the total lower molecular weight (LMW) homopolymer of ethylene (A) is as high as possible e.g. $MFR_2$ of first homopolymer fraction (A-1) may be at least 50 g/10min, such as at least 100 g/10min, like 100 to 200 g/10min lower than the $MFR_2$ of the total lower molecular weight (LMW) homopolymer of ethylene (A).

The density of the two homopolymer fractions (A-1) and (A-2) may be the same or may be different and is in the range of 955 to 980 kg/$m^3$, preferably 965 to 980 kg/$m^3$ or 965 to 975 kg/$m^3$.

In an embodiment of the present invention the density of homopolymer fractions (A-1) and (A-2) are the same or differ +/- 5 kg/$m^3$, preferably +/- 2 kg/$m^3$.

The total lower molecular weight (LMW) homopolymer of ethylene (A) may comprise 30 to 60 wt% of the first ethylene homopolymer fraction (A-1) and 70 to 40 wt% of the second ethylene homopolymer fraction (A-2). In some embodiments, there is an excess of the second ethylene homopolymer fraction (A-2), e.g. 54 to 70 wt% of the second ethylene homopolymer fraction (A-2).

In another embodiment the total lower molecular weight (LMW) homopolymer of ethylene (A) contains the same amount of first and second ethylene homopolymer fractions (A-1) and (A-2).

The higher molecular weight fraction (B) has a lower $MFR_2$ and a lower density than the lower molecular weight fraction (A).

Preferably, the znLLDPE is produced in a multi-stage, e.g. two-stage or three-stage polymerization using the same Ziegler-Natta catalyst in all stages. Preferably, the znLLDPE is made using a slurry polymerization in at least one loop reactor followed by a gas phase polymerization in a gas phase reactor.

A loop reactor - gas phase reactor system or loop - loop - gas phase reactor system is well known as Borealis technology, i.e. a BORSTAR® reactor system.

In one embodiment, the znLLDPE is thus preferably formed in a two-stage process comprising a first slurry loop polymerization followed by gas phase polymerization in the presence of a Ziegler-Natta catalyst.

Preferably, the lower molecular weight fraction (A) is produced in a continuously operating loop reactor where ethylene is polymerized in the presence of a Ziegler-Natta catalyst and the higher molecular weight fraction (B) is then formed in a gas phase reactor using the same Ziegler-Natta catalyst.

Such znLLDPEs are known in the state of the art and are described e.g. in WO 03/066698 or WO 2008/034630 or are commercially available, such as BorShape™ FX1001 and BorShape™ FX1002 (both from Borealis AG).

In another embodiment the znLLDPE is preferably formed in a three-stage process preferably comprising a first slurry reactor (loop reactor 1), whereby the first slurry loop reactor is connected in series with another slurry reactor (loop reactor 2), so that the first homopolymer fraction (A-1) produced in the loop reactor 1 is fed to the loop reactor 2, wherein the second homopolymer fraction (A-2) is produced in the presence of the first fraction (A-1). The loop reactor 2 is thereby connected in series to a gas phase reactor (GPR), so that the total lower molecular weight fraction (A) leaving the second slurry reactor is fed to the GPR to produce the znLLDPE. In this case, the reaction conditions in the two slurry reactors are chosen in a way that in the two slurry reactors different products in view of MFR and/or density are produced.

Such a process is described inter alia in WO 2016/198273.

A suitable process is the Borstar PE 3G process.

The polymerization is conducted in the presence of a Ziegler Natta catalyst. Ziegler Natta catalysts are useful as they can produce polymers within a wide range of molecular weight and other desired properties with a high productivity. Ziegler Natta catalysts used in the present invention are preferably supported on an external support.

Suitable Ziegler Natta catalysts preferably contain a magnesium compound, an aluminium compound and a titanium compound supported on a particulate support.

The particulate support typically used in Ziegler-Natta catalysts comprises an inorganic oxide support, such as silica, alumina, titania, silica-alumina and silica-titania or a MgCl2 based support. The catalyst used in the present invention is supported on an inorganic oxide support. Most preferably the Ziegler-Natta catalyst used in the present invention is supported on silica.

The average particle size of the silica support can be typically from 10 to 100 $\mu$m. However, it has turned out that special advantages can be obtained if the support has an average particle size from 15 to 30 $\mu$m, preferably from 18 to 25 $\mu$m. Alternatively, the support may have an average particle size of from 30 a 80 $\mu$m, preferably from 30 to 50 $\mu$m. Examples of suitable support materials are, for instance, ES747JR produced and marketed by Ineos Silicas (former Crossfield), and SP9-491, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides, aluminium dialkyl chlorides and aluminium alkyl sesquichlorides.

The transition metal is preferably titanium. The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794 or WO-A-99/51646. Alternatively, it can be prepared by first preparing a solution from the components and then contacting the solution with a carrier, as described in WO-A-01/55230.

The Ziegler Natta catalyst is used together with an activator, which is also called as cocatalyst. Suitable activators are metal alkyl compounds, typically Group 13 metal alkyl compounds, and especially aluminium alkyl compounds. They include trialkylaluminium compounds, such as trimethylaluminium, triethylaluminium, tri-isobutylaluminium, trihexylaluminium and tri-n-octylaluminium. Aluminium alkyl compounds may also include alkyl aluminium halides, such as ethylaluminium dichloride, diethylaluminium chloride, ethylaluminium sesquichloride, dimethylaluminium chloride and the like and alkylaluminium oxy-compounds, such as methylaluminiumoxane, hexaisobutylaluminiumoxane and tetraisobutylaluminiumoxane and also other aluminium alkyl compounds, such as isoprenylaluminium. Especially preferred cocatalysts are trialkylaluminiums, of which triethylaluminium, trimethylaluminium and tri-isobutylaluminium are particularly preferred.

The amount in which the activator is used depends on the specific catalyst and activator. Typically triethylaluminium is used in such amount that the molar ratio of aluminium to the transition metal, like Al/Ti, is for example from 1 to 1000, preferably from 3 to 100 and in particular from about 5 to about 30 mol/mol.

Additionally the znLLDPE, preferably the znLLDPE terpolymer may also contain one or more additives selected from antioxidants, process stabilizers, slip agents, pigments, UV-stabilizers and other additives known in the art.

*Ad multimodal metallocene catalysed linear low density polyethylene (mLLDPE)*

The multimodal metallocene catalysed linear low density polyethylene (mLLDPE) has a density in the range of 905 to 930 kg/$m^3$ (ISO 1183), preferably of 910 to 925 kg/$m^3$ and more preferably of 915 to 920 kg/$m^3$.

The $MFR_2$ (190°C, 2.16 kg, ISO 1133) of the mLLDPE is in the range of 0.01 to 1.5 g/10 min, preferably of 0.1 to 1.0 g/10 min and more preferably of 0.3 to 0.8 g/10 min.

The mLLDPE has a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 80, preferably 30 to 65 and more preferably 35 to 50.

The multimodal metallocene catalysed linear low density polyethylene (mLLDPE) comprises, preferably consists of

(i) 30.0 to 70.0 wt%, based on the mLLDPE, of an ethylene-1-butene polymer component (A), and
(ii) 70.0 to 30.0 wt%, based on the mLLDPE, of an ethylene-1-hexene polymer component (B).

The amount of (A) and (B) preferably add up to 100.0 wt%.

In a preferred embodiment of the present invention, the ethylene-1-butene polymer component (A) consists of an ethylene polymer fraction (A-1) and (A-2).

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

In case that the ethylene-1-butene polymer component (A) consists of ethylene polymer fractions (A-1) and (A-2), the $MFR_2$ of the ethylene polymer fractions (A-1) and (A-2) may be the same or may be different from each other.

Thus, the ethylene polymer fractions (A-1) and (A-2) have a $MFR_2$ (190°C, 2.16 kg, ISO 1133) in the range of 1.0 to 300.0 g/10 min, preferably of 3.0 to 200.0 g/10 min, more preferably of 5.0 to 100.0 g/10 min and even more preferably of 6.0 to 80.0 g/10 min, like 8.0 to 50.0 g/10 min.

The $MFR_2$ of the ethylene polymer components (A) and (B) are different from each other.

The ethylene polymer component (A) has a $MFR_2$ (190°C, 2.16 kg, ISO 1133) in the range of 5.0 to 300 g/10 min, preferably of 10.0 to 200 g/10 min, more preferably of 15.0 to 100 g/10 min, even more preferably of 20.0 to 80.0 g/10 min and still more preferably of 25.0 to 50.0 g/10 min.

The ethylene polymer component (B) has a $MFR_2$ (190°C, 2.16 kg, ISO 1133) in the range of 0.001 to 0.1 g/10 min, preferably of 0.005 to 0.09 g/10 min, more preferably of 0.008 to 0.08 g/10 min and even more preferably of 0.01 to 0.06 g/10 min.

In an embodiment of the invention it is preferred the ratio of the $MFR_2$ (190°C, 2.16 kg, ISO 1133) of the ethylene-1-butene polymer component (A) to the $MFR_2$ (190°C, 2.16 kg, ISO 1133) of the final multimodal metallocene catalysed linear low density polyethylene (mLLDPE) is at least 15.0 to 300, preferably 30.0 to 250, more preferably of 40.0 to 200 and even more preferably of 50.0 to 160.

Naturally, in addition to multimodality with respect to, i.e. difference between, the $MFR_2$ of ethylene polymer

components (A) and (B), the multimodal PE of the invention can also be multimodal e.g. with respect to one or both of the two further properties:
multimodality with respect to, i.e. difference between,

- the comonomer content(s) present in the ethylene polymer components (A) and (B); and/or
- the density of the ethylene polymer components (A) and (B).

Preferably, the multimodal metallocene catalysed linear low density polyethylene (mLLDPE) is further multimodal with respect to the comonomer content of the ethylene polymer components (A) and (B).
The comonomer type for the polymer fractions (A-1) and (A-2) is the same, thus both fractions therefore have 1-butene as comonomer.
Even more preferably the multimodal metallocene catalysed linear low density polyethylene (mLLDPE) of the invention is further multimodal with respect to difference in density between the ethylene polymer component (A) and ethylene polymer component (B). Preferably, the density of ethylene polymer component (A) is different, preferably higher, than the density of the ethylene polymer component (B).
The density of the ethylene polymer component (A) is in the range of 930 to 955 kg/m$^3$, preferably of 935 to 950 kg/m$^3$, more preferably 938 to 945 kg/m$^3$ and/or the density of the ethylene polymer component (B) is of in the range of 880 to 915 kg/m$^3$, preferably of 885 to 910 kg/m$^3$ and more preferably of 888 to 905 kg/m$^3$.
The polymer fraction (A-1) has a density in the range of from 920 to 955 kg/m$^3$, preferably of 925 to 950 kg/m$^3$, more preferably of 930 to 948 kg/m$^3$, like 935 to 945 kg/m$^3$.
The density of the polymer fraction (A-2) is in the range of from 930 to 955 kg/m$^3$, preferably of 935 to 950 kg/m$^3$, like 938 to 945 kg/m$^3$.
More preferably the multimodal metallocene catalysed linear low density polyethylene (mLLDPE) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.
It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.
The ethylene polymer component (A) is present in an amount of 30.0 to 70.0 wt% based on the multimodal metallocene catalysed linear low density polyethylene (mLLDPE), preferably in an amount of 32.0 to 55.0 wt% and even more preferably in an amount of 34.0 to 45.0 wt%. Thus, the ethylene polymer component (B) is present in an amount of 70.0 to 30.0 wt% based on the multimodal metallocene catalysed linear low density polyethylene (mLLDPE), preferably in an amount of 68.0 to 45.0 wt% and more preferably in an amount of 66.0 to 55.0 wt%.
The multimodal metallocene catalysed linear low density polyethylene (mLLDPE), can be produced in a 2-stage process, preferably comprising a slurry reactor (loop reactor), whereby the slurry (loop) reactor is connected in series to a gas phase reactor (GPR), whereby either ethylene component (A) or ethylene component (B) is produced in the loop reactor and the other ethylene polymer component is then produced in GPR in the presence of the first produced ethylene polymer component to produce the multimodal metallocene catalysed linear low density polyethylene (mLLDPE), preferably the ethylene polymer component (A) is produced in the loop reactor and the ethylene polymer component (B) is produced in GPR in the presence of the ethylene polymer component (A) to produce the multimodal metallocene catalysed linear low density polyethylene (mLLDPE).
In case that the ethylene component (A) of the multimodal metallocene catalysed linear low density polyethylene (mLLDPE) consists of ethylene polymer fractions (A-1) and (A-2), the multimodal metallocene catalysed linear low density polyethylene (mLLDPE) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.
The loop reactor 2 is thereby connected in series to a gas phase reactor (GPR), so that the ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.
Such a process is described inter alia in WO 2016/198273, WO 2021009189, WO 2021009190, WO 2021009191 and WO 2021009192. Full details of how to prepare suitable multimodal metallocene catalysed linear low density polyethylene (mLLDPE) can be found in these references.
A suitable process is the Borstar PE process or the Borstar PE 3G process.

The multimodal metallocene catalysed linear low density polyethylene (mLLDPE) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene catalysed multimodal metallocene catalysed linear low density polyethylene (mLLDPE). This can counted as part of the ethylene polymer component (A).

The multimodal metallocene catalysed linear low density polyethylene (mLLDPE) used in the core layer (CL) of the present of the invention is one made using a metallocene catalyst. A metallocene catalyst comprises a metallocene complex and a cocatalyst. The metallocene compound or complex is referred herein also as organometallic compound (C).

As metallocene catalyst, the one described for the mHDPE can be used.

The multimodal metallocene catalysed linear low density polyethylene (mLLDPE) may contain further polymer components and optionally additives and/or fillers. In case the multimodal metallocene catalysed linear low density polyethylene (mLLDPE) contains further polymer components, then the amount of the further polymer component(s) typically varies between 3.0 to 20.0 wt% based on the combined amount of the multimodal metallocene catalysed linear low density polyethylene (mLLDPE) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the multimodal metallocene catalysed linear low density polyethylene (mLLDPE), but to the amount of the respective additive(s), based on the total amount of the multimodal metallocene catalysed linear low density polyethylene (mLLDPE) (100 wt%).

### *Multilayered film*

The multilayered film according to the present invention has an attractive balance of mechanical, e.g. tensile modulus (TM) or tensile strength (TS), and optical properties, e.g. haze.

Films according to the present invention may have a haze measured according to ASTM D1003 on a 25 μm test blown film of below 12%, preferably in the range of 3 to 11% and more preferably in the range of 5 to 10%.

Films according to the present invention have good stiffness (tensile modulus measured on a 25 μm monolayer test blown film according to ISO 527-3), i.e. >1200 MPa (in machine direction).

Thus, the multilayered films according to the present invention have a tensile modulus (measured on a 25 μm monolayer test blown film according to ISO 527-3) in machine (MD) direction in the range of >1200 MPa to 3000 MPa, preferably of 1500 MPa to 2500 MPa and more preferably of 1700 MPa to 2200 MPa.

As mentioned above a multilayered film according to the present invention has an attractive balance of mechanical, e.g. tensile modulus or strength, and optical properties, e.g. haze and thus provides an attractive alternative to substitute polyester films.

This can be seen in an improved optomechanical ability (I) (OMA I) according to formula:

$$OMA\ I = \frac{Tensile\ Modulus\ (MD)[MPa] * Elongation@\ (MD)(\%)}{Haze\ (25\ \mu m)[\%]}$$

determined on 25 μm test blown film of at least 9000 [MPa*g/%] up to 30000 [MPa*g/%], preferably in the range of from 10000 [MPa*g/%] up to 25000 [MPa*g/%], more preferably in the range of from 12000 [MPa*g/%] up to 20000 [MPa*g/%], wherein the Tensile Modulus and the Elongation in machine direction are measured according to ISO 527-3 at 23°C on 25 μm test blown films and haze is measured according to ASTM D1003 on a 25 μm test blown film.

In addition or alternatively this improved balance can be seen by an improved optomechanical ability (II) (OMA II) according to formula:

$$OMA\ II = \frac{Tensile\ Strength\ (MD)[MPa] * Elongation@\ (MD)(\%)}{Haze\ (25\ \mu m)[\%]}$$

determined on 25 μm test blown film of at least 1000 [MPa*g/%] up to 3000 [MPa*g/%], preferably in the range of from 1200 [MPa*g/%] up to 2500 [MPa*g/%], more preferably in the range of from 1500 [MPa*g/%] up to 2000 [MPa*g/%], wherein the Tensile Strength and Elongation in machine direction are measured according to ISO 527-3 at 23°C and haze is measured according to ASTM D1003.

The multilayered film of the invention is an uniaxially oriented film. Preferably, the film is oriented in the machine direction.

The uniaxially oriented multilayered film of the present invention can have a thickness in the range of 5.0 - 100 μm, such as 10.0 - 75.0 μm, like 15.0 - 50 μm or 20.0 - 40.0 μm after orientation.

The multilayer film of the invention comprises least two layers (A), being skin layers (SKL-1 and SKL-2), sandwiching a layer (B), being a core layer (CL).Thus, the films of the invention comprise at least three layers, however it is possible for the films to comprise more than three layers, such as 4 or 5 layers. Where more than three layers are present, the additional layers are typically tie layers.

The skin layers and the core layer may all be of equal thickness or alternatively the core layer may be thicker than each of the skin layers.

A convenient film comprises skin layers which each form 10 to 35%, preferably 15 to 30% of the total thickness of the 3-layered film, the core layer forming the remaining thickness, e.g. 30 to 80%, preferably 40 to 70% of the total thickness of the 3-layered film. The multilayer films of the present invention can be symmetric (with the skin layers SKL-1 and SKL-2 having the same thickness, or asymmetric (with the skin layers SKL-1 and SKL-2 differing in view of their thickness).

The three-layer structure in accordance with the present invention may be prepared by any conventional film extrusion procedure known in the art including cast film and blown film extrusion. Preferably, the three-layer film is formed by blown film extrusion, more preferably by coextrusion processes, which in principle are known and available to the skilled person. Typical processes for preparing a three-layer structure in accordance with the present invention are extrusion processes through an angular die, followed by blowing into a tubular film by forming a bubble which is collapsed between the rollers after solidification. This film can then be slid, cut or converted, such as by using a gazette head, as desired. Conventional film production techniques may be used in this regard. Typically the core layer mixture and the polymer or mixture for the sandwiching layers are coextruded at a temperature in the range of from 160 to 240°C and cooled by blowing gas (generally air) at a temperature of 10 to 50°C, to provide a frost line height of 1 or 2 to 8 times the diameter of the dye. The blow up ratio should generally be in the range of from 1.5 to 4, such as from 2 to 4, preferably 2.5 to 3.

If desired any of the three layers of the three-layered structure of the invention may comprise usual additives, such as stabilizers, processing aids, colorants, anti-block agents, slip agents etc. in amounts not detrimental to the desired function of the three-layered structure. Typically the overall amount of additives in a layer is 7.0 wt% or less, based on the weight of the layer, preferably 5.0 wt% or less, more preferably 3.0 wt% or less. In embodiments the layers can be completely free of any additives.

The multilayer films of the invention are preferably symmetric, i.e. wherein the two skin layers SKL-1 and SKL-2 are the same (i.e. in view of thickness and of the composition)

The preparation process of the uniaxially oriented multilayer film of the invention comprises at least the steps of forming a layered film structure and stretching the obtained multilayer film in the machine direction, typically in a draw ratio of at least 1:3. As to the first step of the preparation process, the layered structure of the film of the invention may be prepared by any conventional film formation process including extrusion procedures, such as cast film or blown film extrusion. The multilayer films are ideally blown films and are thus preferably prepared by blown film extrusion.

Particularly preferably the multilayer film of the invention is formed by blown film extrusion, more preferably by blown film coextrusion processes. Typically, the compositions providing the core and skin layers will be blown (co)extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.2 to 6, preferably 1.5 to 4.

The obtained, preferably coextruded, multilayer film is subjected to a subsequent stretching step, wherein the multilayer film is stretched in the machine direction. Stretching may be carried out by any conventional technique using any conventional stretching devices, which are well known to those skilled in the art. E.g. the film may be coextruded to first form a bubble which is then collapsed and cooled, if necessary, and the obtained tubular film is stretched in line. Stretching is preferably carried out at a temperature in the range 70-90°C, e.g. about 80°C. Any conventional stretching rate may be used, e.g. 2 to 40 %/second.

Preferably, the film is stretched only in the MD. The effect of stretching in only one direction is to uniaxially

orient the film. The film is stretched at least 3 times, preferably 3 to 10 times, its original length in the machine direction. This is stated herein as a draw ratio of at least 1:3, i.e. "1" represents the original length of the film and "3" denotes that it has been stretched to 3 times that original length. Preferred films of the invention are stretched in a draw ratio of at least 1:4, more preferably between 1:5 and 1:8, e.g. between 1:5 and 1:7. An effect of stretching (or drawing) is that the thickness of the film is similarly reduced. Thus a draw ratio of at least 1:3 preferably also means that the thickness of the film is at least three times less than the original thickness. Blow extrusion and stretching techniques are well known in the art, e.g. in EP-A-299750.

The film preparation process steps of the invention are known and may be carried out in one film line in a manner known in the art. Such film lines are commercially available. The final uniaxially oriented in MD films can be further processed, e.g. laminated on a substrate. Preferably, however, the films are used in non- laminated film applications.

The films of the invention have a wide variety of applications but are of particular interest in packaging.

Thus, viewed from another aspect, the invention provides an article, preferably a packaging article, comprising a uniaxially oriented multilayer film as hereinbefore defined.

The additional optional layers are naturally selected so that they have no adverse effect on the inventive effect achieved with the three-layer structure according to the invention. Thus it is also possible to use the three-layer structure of the present invention for producing a 5- or even 7-layered film, depending upon the desired end application.

However, the three-layer structure in accordance with the present invention preferably is employed as such, without lamination to any further film material.

The uniaxially oriented films of the present invention may be used for the production of packaging articles like bags, pouches, labels or lids, or other technical applications like banknotes. The uniaxially oriented films of the present invention are preferably used for applications related to food packaging.

The present invention will now be described in further detail by the examples provided below.

## Determination methods

Unless otherwise stated in the description or in the experimental part, the following methods were used for the property determinations of the polymers (including its fractions and components) and/or any sample preparations thereof as specified in the text or experimental part.

### Melt Flow Rate

The melt flow rate (MFR) was determined according to ISO 1133 and is indicated in g/10 min. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$logA = x \cdot logB + (1 - x) \cdot logC$$

$$C = 10^\wedge \frac{(logA - x.logB)}{(1-x)}$$

*For Component B:*

B = $MFR_2$ of Component (A)
C = $MFR_2$ of Component (B)
A = final $MFR_2$ (mixture) of multimodal polyethylene copolymer (P)
X = weight fraction of Component (A).

*For Fraction (A-2):*

B = $MFR_2$ of 1$^{st}$ fraction (A-1)
C = $MFR_2$ of 2$^{nd}$ fraction (A-2)

A = final $MFR_2$ (mixture) of loop polymer (= Component (A))
X = weight fraction of the $1^{st}$ fraction (A-1).

**Density**

The density was measured according to ISO 1183 and ISO1872-2 for sample preparation.

**Comonomer contents**

**Quantification of microstructure by NMR spectroscopy**

Quantitative nuclear-magnetic resonance (NMR) spectroscopy was used to quantify the comonomer content of the polymers.

Quantitative $^{13}C\{^{1}H\}$ NMR spectra recorded in the molten-state using a Bruker Advance III 500 NMR spectrometer operating at 500.13 and 125.76 MHz for $^{1}H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^{1}H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the *B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B\ [wt\%] = 100 * (fB * 56.11) / ((fB * 56.11) + (fH * 84.16) + ((1-(fB + fH)) * 28.05))$$

$$H\ [wt\%] = 100 * (fH * 84.16) / ((fB * 56.11) + (fH * 84.16) + ((1-(fB + fH)) * 28.05))$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239.
Griffin, J.M., Tripon, C., Samoson, A., Filip, C., and Brown, S.P., Mag. Res. in Chem. 2007 45, S1, S198.
Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443.
Busico, V., Cipullo, R., Monaco, G., Vacatello, M., Segre, A.L., Macromoleucles 30 (1997) 6251.
Zhou, Z., Kuemmerle, R., Qiu, X., Redwine, D., Cong, R., Taha, A., Baugh, D. Winniford, B., J. Mag. Reson. 187 (2007) 225.
Busico, V., Carbonniere, P., Cipullo, R., Pellecchia, R., Severn, J., Talarico, G., Macromol. Rapid Commun. 2007, 28, 1128.
Resconi, L., Cavallo, L., Fait, A., Piemontesi, F., Chem. Rev. 2000, 100, 1253.

**DSC analysis, melting (Tm)**

Data was measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C.
Crystallization temperature (Tc) and crystallization enthalpy (Hc) were determined from the cooling step, while melting temperature (Tm) and melting enthalpy (Hm) are determined from the second heating step.

**Tensile modulus, tensile strength & Elongation**

Tensile modulus and elongation were measured in machine and/or transverse direction according to ISO 527-3 on film samples prepared as described under the Film Sample preparation with film thickness of 25 μm and at a cross head speed of 1 mm/min for the modulus. For tensile strength and elongation a cross head speed of 200 mm/min was used.

Haze

Haze as a measure for the optical appearance of the films was determined according to ASTM D1003 on film samples with a thickness of 25 μm.
**Optomechanical ability (I) (OMA I)** was determined on 25 μm test blown film and was calculated according to formula:

$$OMA\ I = \frac{Tensile\ Modulus\ (MD)[MPa] * Elongation@\ (MD)(\%)}{Haze\ (25\ \mu m)[\%]}$$

wherein the Tensile Modulus and Elongation in machine direction were measured according to ISO 527-3 at 23°C and haze was measured according to ASTM D1003.
**Optomechanical ability (II) (OMA II)** was determined on 25 μm test blown film and was calculated according to formula:

$$OMA\ II = \frac{Tensile\ Strength\ (MD)[MPa] * Elongation@\ (MD)(\%)}{Haze\ (25\ \mu m)[\%]}$$

wherein the Tensile Strength and Elongation in machine direction were measured according to ISO 527-3 at 23°C and haze was measured according to ASTM D1003.

Examples:

**Cat.Example: Catalyst preparation for mHDPE and mLLDPE:**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Polymerization:**

IE1: Borstar pilot plant with a 3-reactor set-up (loop1 - loop2 - GPR 1) and prepolymerization. Multimodal mHDPE and mLLDPE were produced using the polymerization conditions as given in Table 1.

**Table 1:** Polymerization conditions for mHDPE and mLLDPE

| | mHDPE | mLLDPE |
|---|---|---|
| **Prepoly loop reactor** | | |
| Temp. (°C) | 50 | 50 |
| Press. (kPa) | 5851 | 5624 |
| $H_2$(g/h) | 0.04 | 0.04 |
| Split (wt%) | 3.7 | 3.6 |
| **loop 1 Fraction (A-1)** | | |
| Temp. (°C) | 85 | 85 |
| Press. (kPa) | 5445 | 5534 |
| C2 conc. (mol%) | 4.3 | 4.4 |
| H2/C2 ratio (mol/kmol) | 0.59 | 0.93 |
| C4/C2 ratio (mol/kmol) | 3.8 | 72.7 |
| Split (wt%) | 19.9 | 18.7 |
| Density (kg/m3) of loop 1 material (fraction (A-1) | 958.8 | 942.6 |
| MFR2 (g/10 min) of loop 1 material (fraction (A-1) | 14.9 | 42 |
| **loop 2** | | |
| Temp. (°C) | 85 | 85 |
| Press. (kPa) | 5390 | 5349 |
| C2 conc. (mol%) | 4.0 | 4.1 |
| H2/C2 ratio (mol/kmol) | 0.34 | 0.6 |
| C4/C2 ratio (mol/kmol) | 1.2 | 50 |
| Split (wt%) | 22.0 | 19.8 |
| Density (kg/m3) after loop 2 (component (A)) | 963.1 | 941.2 |
| MFR2 (g/10 min) after loop 2 (component (A)) | 24.0 | 38.4 |
| MFR2 (g/10 min) of loop 2 material (fraction (A-2)) | 39.4 | 34.7 |
| Density (kg/m3) of loop 2 material (fraction (A-2)) | 967.6 | 939.6 |
| **GPR** | | |
| Temp. (°C) | 85 | 75 |
| Press. (kPa) | 2000 | 2000 |
| H2/C2 ratio (mol/kmol) | 0.34 | 0.72 |
| C6/C2 ratio (mol/kmol) | - | 10.25 |
| Split (wt%) | 55 | 57.9 |
| MFR2 (g/10 min) of GPR material (Component (B)) | 0.06 | 0.03 |
| Density (kg/m3) of GPR material (Component (B)) | 953.1 | 899 |

The polymers were mixed with 0.05 wt% Irganox 1010 (BASF), 0.2 wt% Irgafos 168 (BASF) & 0.05 wt% CEASIT FI (Baerlocher) calcium stearate, where wt% are relative to total weight of composition (the sum of polymer powder + additive = 100%) compounded and extruded on a ZSK 57 twin screw extruder. The melt temperature was 210°C; production rate was 200kg/h.

**Table 2:** Material properties of mHDPE and mLLDPE

| Material | mHDPE | mLLDPE |
|---|---|---|
| $MFR_2$ (g/10 min) (final) | 0.86 | 0.6 |
| $MFR_{21}$ (g/10 min) | 27.7 | 23.8 |
| $MFR_{21}/MFR_2$ | 32.2 | 39.7 |
| Density (kg/$m^3$) | 957.6 | 917 |

**Catalyst for preparing znLLDPE for Inventive Example, as well as for Comparative Example CE2 (CAT2)**

A solid polymerization catalyst component produced as described in Example 1 of EP 1378528 A1 was used together with triethylaluminium cocatalyst so that the molar ratio of Al/Ti was about 15.

**Polymerization of znLLDPE:**

Borstar pilot plant with a 3-reactor set-up (loop1 - loop2 - GPR 1) and a prepolymerization loop reactor.

znLLDPE was produced by using the polymerization conditions as given in Table 3.

**Table 3:** Polymerization conditions for znLLDPE

| | znLLDPE |
|---|---|
| **Prepoly reactor** | |
| Temperature (°C) | 70 |
| Pressure (kPa) | 5777 |
| Split (wt%) | 2 |
| **First loop reactor** | |
| Temperature (°C) | 95 |
| Pressure (kPa) | 5503 |
| C2 (mol%) | 4.9 |
| H2/C2 (mol/kmol) | 308 |
| $MFR_2$ (g/10 min) of homopolymer fraction (A-1) | 205 |
| Density of homopolymer fraction (A-1) | 970 |
| Split (wt%) | 18 |
| **Second loop reactor** | |
| Temperature (°C) | 95 |
| | znLLDPE |
| Pressure (kPa) | 5392 |
| C2 (mol%) | 5.6 |
| H2/C2 (mol/kmol) | 606 |
| Split (wt%) | 26 |
| Density (kg/$m^3$) after loop 2 (homopolymer (A)) | 970 |
| $MFR_2$ (g/10 min) after loop 2 (homopolymer (A)) | 420 |
| Density (kg/$m^3$) of homopolymer fraction (A-2) | 970 |
| $MFR_2$ (g/10 min) of homopolymer fraction (A-2) | 729 |

(continued)

| Gas phase reactor | |
|---|---|
| Temperature (°C) | 82 |
| Pressure (kPa) | 1985 |
| C2 (mol%) | 13.2 |
| H2/C2 (mol/kmol) | 22.0 |
| C4/C2 (mol/kmol) | 98.1 |
| C6/C2 (mol/kmol) | 128.0 |
| Split (wt%) | 54 |

The polymer powder was mixed under nitrogen atmosphere with 1200 ppm of Irganox B561 and 400 ppm Ca-stearate. Then it was compounded and extruded under nitrogen atmosphere to pellets by using a JSW CIMP90 twin screw extruder.

**Table 4:** Material properties of znLLDPE

| Material | znLLDPE-2 |
|---|---|
| $MFR_2$ (g/10 min) (final) | 0.38 |
| $MFR_5$ (g/10 min) (final) | 1.58 |
| $MFR_{21}$ (g/10 min) (final) | 35.2 |
| Density (kg/m$^3$) | 941 |
| C4 (wt%) | 0.9 |
| C6 (wt%) | 3.1 |

*Materials used for Comparative Examples CE1 and CE2:*

For Comparative Example CE1 for all layers:
Lumicene Supertough 40ST05 (40ST05), commercially available from Total, a metallocene MDPE with density 940 kg/m$^3$, $MFR_2$ 0.5 g/10min, Tm 127°C.

For Comparative Example CE2 for SKL-1 and SKL-2:
HDPE Borstar® FB5600 from Borouge, bimodal ethylene copolymer, density 960 kg/m$^3$, Tm 132°C, $MFR_2$ 0.7 g/10 min, $MFR_5$ 2.5 g/10 min, $MFR_{21}$ 42 g/10 min. $MFR_{21}/MFR_5$ 16.8.

**Film preparation:**

The 3 layer films before MDO were produced on an Alpine 3 layers BF line, all of them had a start film thickness of 150 μm, the melt temperature was fixed at 210°C, BUR 1:3, the details are as follows:

**IE1:**

Layer A (SKL-1) - 100 wt% mHDPE, 37.5 μm;
Layer B (CL) - 60 wt% znLLDPE + 40 wt% mLLDPE, 75 μm;
Layer A (SKL-2) - 100 wt% mHDPE, 37.5 μm;

**CE1:**

Layer A (SKL-1) - 100 wt% 40ST05, 37.5 μm;
Layer B (CL) - 100 wt% 40ST05, 75 μm;
Layer A (SKL-2) - 100 wt% 40ST05, 37.5 μm;

**CE2:**

Layer A (SKL-1) - 100 wt% FB5600, 37.5 μm;
Layer B (CL) - 60 wt% znLLDPE + 40 wt% mLLDPE, 75 μm;
Layer A (SKL-2) - 100 wt% FB5600, 37.5 μm;
wt% based on the respective layers

The MDO was done on a lab scale Alpine MDO 20 pilot machine, with ratio of 1:6, stretching roll temperature 107°C. The final film therefore has total thickness of 25 μm. The properties of CEs and IE on MDO are shown in Table 5.

**Table 5:** film properties

| | | IE1 | CE1 | CE2 |
|---|---|---|---|---|
| MD ratio | | 1:6 | 1:6 | 1:6 |
| Final thickness | μm | 25 | 25 | 25 |
| TM/MD | MPa | 1832 | 1699 | 2127 |
| Tensile strength/MD | MPa | 228 | 186 | 234 |
| Elongation @ MD | % | 55.4 | 13.6 | 51.0 |
| TM/TD | MPa | 1733 | 1398 | 1870 |
| Tensile strength/TD | MPa | 31.9 | 30.4 | 33.8 |
| Elongation @ TD | % | 403 | 754 | 428 |
| Haze | % | 7.0 | 2.9 | 13.0 |
| TM(MD)*Elongation@ (MD) /haze | | 14499 | 7968 | 8344 |
| TS(MD)*Elongation@ (MD) /haze | | 1805 | 872 | 918 |
| TS.....tensile strength TM ....... tensile modulus | | | | |

Due to the nature of the mHDPE, the melting point of the mHDPE (Tm 132°C) is much higher than for 40ST05 and similar to FB5600, thus, the thermal shielding is much better than for CE1 using only 40ST05.

As can be seen from above Table, the IE has higher stiffness (i.e. higher tensile modulus), TS, elongation in MD, but worse haze, compared to the pure medium density PE solution of CE1.

Compared to the CE2, IE1 has lower stiffness, but slightly increased elongation in MD and clearly improved optics.

Thus, the IE has an improved combination of good stiffness and optics, which can be seen by improved OMA I and OMA II and therefore makes the inventive film structure most suitable for polyester replacement.

## Claims

**1.** An uniaxially oriented multilayered polyethylene film comprising at least two layers (A), being skin layers (SKL-1 and SKL-2), sandwiching a layer (B), being a core layer (CL), wherein

(A) the skin layers (SKL-1 and SKL-2) can be the same or can be different and comprise at least 90.0 wt%, based on the skin layer, of a multimodal metallocene catalysed high density polyethylene (mHDPE), wherein the multimodal mHDPE has a density (ISO 1183) in the range of 948 to 970 kg/$m^3$ and a $MFR_2$ (190°C, 2.16 kg, ISO 1133) in the range of 0.1 to 3.0 g/10 min and wherein the multimodal mHDPE comprises at least

(i) 30 to 70 wt%, relative to the total weight of the multimodal mHDPE, of a polyethylene component (A) having a density (ISO 1183) in the range of 955 to 980 kg/$m^3$ and a $MFR_2$ (190°C, 2.16 kg, ISO 1133) in the range of 10 to 500 g/10 min; and
(ii) 30 to 70 wt%, relative to the total weight of the multimodal mHDPE, of a polyethylene component (B) being a polyethylene having a density (ISO 1183) in the range of 935 to 965 kg/$m^3$ and a $MFR_2$ (190°C, 2.16 kg, ISO 1133) in the range of 0.0001 to 1.0 g/10 min;

and wherein
(B) the core layer (CL) comprises:

a) 50.0 wt% to 80.0 wt%, based on the total weight of the core layer (CL), of a multimodal Ziegler-Natta catalysed linear low density polyethylene (znLLDPE) having a density in the range of 925 to 950 kg/$m^3$ (ISO 1183) and a $MFR_5$ (190°C, 5 kg, ISO 1133) in the range of from 0.1 to 6.0 g/10 min; and
b) 20.0 wt% to 50.0 wt%, based on the total weight of the core layer (CL), of a multimodal metallocene catalysed linear low density polyethylene (mLLDPE) having a density in the range of 905 to 930 kg/$m^3$ (ISO 1183), a $MFR_2$ (190°C, 2.16 kg, ISO 1133) in the range of 0.01 to 1.5 g/10 min and a ratio of the $MFR_{21}$ (190°C, 21.6 kg, ISO 1133) to $MFR_2$ (190°C, 2.16 kg, ISO 1133), $MFR_{21}/MFR_2$, in the range of 22 to 80.

**2.** The uniaxially oriented multilayered polyethylene film according to claim 1, wherein the multimodal mHDPE has

a $MFR_2$ in the range of 0.3 to 2.5 g/10 min, preferably 0.5 to 2.0 g/10 min and more preferably 0.6 to 1.5 g/10 min and/or
a $MFR_{21}$ (190°C, 21.6 kg, ISO 1133) in the range of 15 to 80 g/10min, preferably in the range of 20 to 60 g/10 min and more preferably 25 to 40 g/10 min and/or
a Flow Rate Ratio (FRR) of the $MFR_{21}/MFR_2$ in the range of at least 26 to 80, preferably at least 28 to 70 and more preferably of at least 30 to 50.

**3.** The uniaxially oriented multilayered polyethylene film according to claim 1 or 2, wherein in the multimodal mHDPE the polyethylene component (A) is an ethylene copolymer whereby as comonomer for the polyethylene component (A) 1-butene, 1-hexene or 1-octene, more preferably 1-butene is used and polyethylene component (B) is an ethylene homopolymer, whereby polyethylene component (A) may consist of a single ethylene copolymer or may be an ethylene copolymer mixture comprising, preferably consisting of a first ethylene copolymer fraction (A-1) and a second ethylene copolymer fraction (A-2).

**4.** The uniaxially oriented multilayered polyethylene film according to any of the preceding claims, wherein in the multimodal mHDPE

the polyethylene component (A) has a $MFR_2$ in the range of 10 to 400 g/10min, preferably 12 to 200 g/10min, more preferably 15 to 100 g/10min and most preferably 20 to 50 g/10 min and a density (ISO 1183) in the range of 955 to 970 kg/$m^3$, preferably 958 to 968 kg/$m^3$ and even more preferably 960 to 965 kg/$m^3$; and/or
in case that polyethylene component (A) consists of a first ethylene copolymer fraction (A-1) and a second ethylene copolymer fraction (A-2), the $MFR_2$ and/or the density of fractions (A-1) and (A-2) may be the same or may be different from each other, whereby the ethylene polymer fraction (A-1) has a $MFR_2$ (190°C, 2.16 kg, ISO 1133) in the range of 1.0 to 500 g/10 min, preferably of 5.0 to 200 g/10 min, more preferably of 8.0 to 100 g/10 min and even more preferably of 10.0 to 50.0 g/10 min and/or
a density (ISO 1183) in the range of 945 to 970 kg/$m^3$, preferably 950 to 965 kg/$m^3$ and even more preferably 952 to 962 kg/$m^3$; and/or
the ethylene polymer fraction (A-2) has a $MFR_2$ (190°C, 2.16 kg, ISO 1133) in the range of 10.0 to 500 g/10 min, preferably of 15.0 to 200 g/10 min, more preferably of 20.0 to 100 g/10 min and most preferably of 25.0 to 60.0 g/10 min and/or
a density (ISO 1183) in the range of 950 to 980 kg/$m^3$, preferably 955 to 975 kg/$m^3$ and more preferably 960 to 970 kg/$m^3$; and/or
the polyethylene component (B) has a $MFR_2$ in the range of 0.001 to 0.8 g/10min, preferably 0.01 to 0.6 g/10min, and more preferably 0.03 to 0.2 g/10min and/or
a density (ISO 1183) in the range of 945 to 965 kg/$m^3$, preferably 948 to 962 kg/$m^3$ and more preferably 950 to 960 kg/$m^3$.

**5.** The uniaxially oriented multilayered polyethylene film according to any of the preceding claims, wherein the multimodal Ziegler-Natta catalysed linear low density polyethylene (znLLDPE) comprises

(A) a lower molecular weight (LMW) homopolymer of ethylene and
(B) a higher molecular weight (HMW) terpolymer of ethylene, 1-butene and 1-hexene wherein the LMW homopolymer fraction (A) has a lower molecular weight than the HMW terpolymer fraction (B) and

the lower molecular weight fraction (A) of the znLLDPE has a melt index $MFR_2$ according to ISO 1133 (190°C) in

the range of 200 to 1000 g/10min, preferably of 250 to 800 g/10min; a density according to ISO 1183 in the range of 940 to 980 kg/$m^3$, preferably 945 to 975 kg/$m^3$, and the higher molecular weight fraction (B) has a lower $MFR_2$ and a lower density than the lower molecular weight fraction (A).

**6.** The uniaxially oriented multilayered polyethylene film according to claim 5, wherein the lower molecular weight (LMW) homopolymer of ethylene (A) consists of two homopolymer fractions (A-1) and (A-2), wherein the homopolymer fraction (A-1) preferably has a $MFR_2$ according to ISO 1133 (190°C) in the range of 100 to 400 g/10 min, more preferably in the range of 150 to 300 g/10 min, whereas the homopolymer fraction (A-2) preferably has a $MFR_2$ according to ISO 1133 (190°C) in the range of 450 to 1200 g/10 min, more preferably in the range of 600 to 1100 g/10 min and whereby the $MFR_2$ of fraction (A-1) is preferably lower than the $MFR_2$ of the total lower molecular weight (LMW) homopolymer of ethylene (A) and/or the density of the two homopolymer fractions (A-1) and (A-2) may be the same or may be different and is in the range of 955 to 980 kg/$m^3$, preferably 965 to 980 kg/$m^3$ or 965 to 975 kg/$m^3$.

**7.** The uniaxially oriented multilayered polyethylene film according to any of the preceding claims, wherein the multimodal metallocene catalysed linear low density polyethylene (mLLDPE) consists of

(i) 30.0 to 70.0 wt%, based on the mLLDPE, of an ethylene-1-butene polymer component (A), and
(ii) 70.0 to 30.0 wt%, based on the mLLDPE, of an ethylene-1-hexene polymer component (B);
whereby the ethylene-1-butene polymer component (A) has

a density in the range of 930 to 955 kg/$m^3$, preferably of 935 to 950 kg/$m^3$, more preferably 938 to 945 kg/$m^3$, and
a $MFR_2$ (190°C, 2.16 kg, ISO 1133) in the range of 5.0 to 300 g/10 min, preferably of 10.0 to 200 g/10 min, more preferably of 15.0 to 100 g/10 min, even more preferably of 20.0 to 80.0 g/10 min and still more preferably of 25.0 to 50.0 g/10 min, and

the ethylene-1-hexene polymer component (B) has

a density in the range of 880 to 915 kg/$m^3$, preferably of 885 to 910 kg/$m^3$ and more preferably of 888 to 905 kg/$m^3$, and
a $MFR_2$ (190°C, 2.16 kg, ISO 1133) in the range of 0.001 to 0.1 g/10 min, preferably of 0.005 to 0.09 g/10 min, more preferably of 0.008 to 0.08 g/10 min and even more preferably of 0.01 to 0.06 g/10 min., and/or

whereby the multimodal metallocene catalysed linear low density polyethylene (mLLDPE) has

a density in the range of 910 to 925 kg/$m^3$ and more preferably of 915 to 920 kg/$m^3$,
a $MFR_2$ (190°C, 2.16 kg, ISO 1133) in the range of 0.1 to 1.0 g/10 min and more preferably of 0.3 to 0.8 g/10 min and
a ratio of the $MFR_{21}$ (190°C, 21.6 kg, ISO 1133) to $MFR_2$ (190°C, 2.16 kg, ISO 1133), $MFR_{21}/MFR_2$, in the range of 30 to 65, preferably of 35 to 50.

**8.** The uniaxially oriented multilayered polyethylene film according to claim 7 wherein in the mLLDPE the ethylene-1-butene polymer component (A) consists of an ethylene polymer fraction (A-1) and (A-2), whereby

the ethylene polymer fractions (A-1) and (A-2) have a $MFR_2$ (190°C, 2.16 kg, ISO 1133) in the range of 1.0 to 300 g/10 min, preferably of 3.0 to 200 g/10 min, more preferably of 5.0 to 100 g/10 min and even more preferably of 6.0 to 80.0 g/10 min, like 8.0 to 50.0 g/10 min and
the ethylene polymer fraction (A-1) has a density in the range of from 920 to 955 kg/$m^3$, preferably of 925 to 950 kg/$m^3$, more preferably of 930 to 948 kg/$m^3$, and
the ethylene polymer fraction (A-2) has a density in the range of from 930 to 955 kg/$m^3$, preferably of 935 to 950 kg/$m^3$, like 938 to 945 kg/$m^3$.

**9.** The uniaxially oriented multilayered polyethylene film according to any of the preceding claims, wherein the film has a haze measured according to ASTM D1003 on a 25 $\mu$m test blown film of below 12%, preferably in the range of 3 to 11% and more preferably in the range of 5 to 10%.

**10.** The uniaxially oriented multilayered polyethylene film according to any of the preceding claims, wherein the film has

a tensile modulus (measured on a 25 μm monolayer test blown film according to ISO 527-3) in machine (MD) direction in the range of >1200 MPa to 3000 MPa, preferably of 1500 MPa to 2500 MPa and more preferably of 1700 MPa to 2200 MPa.

**11.** The uniaxially oriented multilayered polyethylene film according to any of the preceding claims, wherein the film has an optomechanical ability (I) (OMA I) according to formula:

$$OMA\ I = \frac{Tensile\ Modulus\ (MD)[MPa] * Elongation@\ (MD)(\%)}{Haze\ (25\ \mu m)[\%]}$$

determined on 25 μm test blown film of at least 9000 [MPa*g/%] up to 30000 [MPa*g/%], preferably in the range of from 10000 [MPa*g/%] up to 25000 [MPa*g/%], more preferably in the range of from 12000 [MPa*g/%] up to 20000 [MPa*g/%], wherein the Tensile Modulus and the Elongation in machine direction are measured according to ISO 527-3 at 23°C on 25 μm test blown films and haze is measured according to ASTM D1003 on a 25 μm test blown film and/or an improved Optomechanical ability (II) (OMA II) according to formula:

$$OMA\ II = \frac{Tensile\ Strength\ (MD)[MPa] * Elongation@\ (MD)(\%)}{Haze\ (25\ \mu m)[\%]}$$

determined on 25 μm test blown film of at least 1000 [MPa*g/%] up to 3000 [MPa*g/%], preferably in the range of from 1200 [MPa*g/%] up to 2500 [MPa*g/%], more preferably in the range of from 1500 [MPa*g/%] up to 2000 [MPa*g/%], wherein the Tensile Strength and Elongation in machine direction are measured according to ISO 527-3 at 23°C and haze is measured according to ASTM D1003.

**12.** The uniaxially oriented multilayered polyethylene film according to any of the preceding claims, wherein the film is oriented in the machine direction and/or has a thickness in the range of 5.0 - 100 μm, such as 10.0 - 75.0 μm, like 15.0 - 50 μm or 20.0 - 40.0 μm after orientation.

**13.** The uniaxially oriented multilayered polyethylene film according to any of the preceding claims, wherein the film consists of 2 skin layers SKL-1 and SKL-2 and a core layer (CL), whereby the skin layers SKL-1 and SKL-2 each form 10 to 35%, preferably 15 to 30% of the total thickness of the 3-layered film, and the core layer forms the remaining thickness, e.g. 30 to 80%, preferably 40 to 70% of the total thickness of the 3-layered film and/or whereby the film can be symmetric (with the skin layers SKL-1 and SKL-2 having the same thickness, or asymmetric, with the skin layers SKL-1 and SKL-2 differing in view of their thickness.

**14.** The uniaxially oriented multilayered polyethylene film according to any of the preceding claims, wherein the film is symmetric, i.e. wherein the two skin layers SKL-1 and SKL-2 are the same in view of the thickness and their composition.

**15.** Use of the uniaxially oriented multilayered polyethylene film according to any of the preceding claims for the production of packaging articles prefererably selected from the group consisting of bags, pouches, labels or lids, preferably for applications related to food packaging.

**Patentansprüche**

**1.** Uniaxial orientierte mehrschichtige Polyethylenfolie, umfassend mindestens zwei Schichten (A), die Hautschichten (SKL-1 und SKL-2) sind, die eine Schicht (B), die eine Kernschicht (CL) ist, sandwichartig umschließen, wobei

(A) die Hautschichten (bzw. Deckschichten, SKL-1 und SKL-2) gleich oder verschieden sein können und mindestens 90,0 Gew.-%, bezogen auf die Hautschicht, eines multimodalen metallocenkatalysierten Polyethylens hoher Dichte (mHDPE) umfassen,
wobei das multimodale mHDPE eine Dichte (ISO 1183) im Bereich von 948 bis 970 kg/$m^3$ und einen $MFR_2$ (190°C, 2,16 kg, ISO 1133) im Bereich von 0,1 bis 3,0 g/10 min aufweist und wobei das multimodale mHDPE mindestens umfasst

(i) 30 bis 70 Gew.-%, bezogen auf das Gesamtgewicht des multimodalen mHDPE, einer Polyethylenkomponente (A) mit einer Dichte (ISO 1183) im Bereich von 955 bis 980 kg/$m^3$ und einem $MFR_2$ (190°C, 2,16 kg, ISO 1133) im Bereich von 10 bis 500 g/10 min; und

(ii) 30 bis 70 Gew.-%, bezogen auf das Gesamtgewicht des multimodalen mHDPE, einer Polyethylenkomponente (B), die ein Polyethylen mit einer Dichte (ISO 1183) im Bereich von 935 bis 965 kg/$m^3$ und einem $MFR_2$ (190°C, 2,16 kg, ISO 1133) im Bereich von 0,0001 bis 1,0 g/10 min ist;

und wobei

(B) die Kernschicht (CL) umfasst:

a) 50,0 Gew.-% bis 80,0 Gew.-%, bezogen auf das Gesamtgewicht der Kernschicht (CL), eines multimodalen Ziegler-Natta-katalysierten linearen Polyethylens niedriger Dichte (znLLDPE) mit einer Dichte im Bereich von 925 bis 950 kg/$m^3$ (ISO 1183) und einem $MFR_5$ (190°C, 5 kg, ISO 1133) im Bereich von 0,1 bis 6,0 g/10 min; und

b) 20,0 Gew.-% bis 50,0 Gew.-%, bezogen auf das Gesamtgewicht der Kernschicht (CL), eines multimodalen metallocenkatalysierten linearen Polyethylens niedriger Dichte (mLLDPE) mit einer Dichte im Bereich von 905 bis 930 kg/$m^3$ (ISO 1183), einem $MFR_2$ (190°C, 2. 16 kg, ISO 1133) im Bereich von 0,01 bis 1,5 g/10 min und ein Verhältnis von $MFR_{21}$ (190°C, 21,6 kg, ISO 1133) zu $MFR_2$ (190°C, 2,16 kg, ISO 1133), $MFR_{21}/MFR_2$, im Bereich von 22 bis 80.

**2.** Uniaxial orientierte, mehrschichtige Polyethylenfolie nach Anspruch 1, wobei das multimodale mHDPE aufweist

einen $MFR_2$ im Bereich von 0,3 bis 2,5 g/10 min, vorzugsweise 0,5 bis 2,0 g/10 min und besonders bevorzugt 0,6 bis 1,5 g/10 min und/oder

ein $MFR_{21}$ (190°C, 21,6 kg, ISO 1133) im Bereich von 15 bis 80 g/10 min, vorzugsweise im Bereich von 20 bis 60 g/10 min und besonders bevorzugt 25 bis 40 g/10 min und/oder

ein Flussratenverhältnis (FRR) des $MFR_{21}/MFR_2$ im Bereich von mindestens 26 bis 80, vorzugsweise von mindestens 28 bis 70 und besonders bevorzugt von mindestens 30 bis 50.

**3.** Uniaxial orientierte mehrschichtige Polyethylenfolie nach Anspruch 1 oder 2, wobei in dem multimodalen mHDPE die Polyethylenkomponente (A) ein Ethylen-Copolymer ist, wobei als Comonomer für die Polyethylenkomponente (A) 1-Buten, 1-Hexen oder 1-Octen, vorzugsweise 1-Buten, verwendet ist und die Polyethylenkomponente (B) ein Ethylenhomopolymer ist, wobei die Polyethylenkomponente (A) aus einem einzelnen Ethylencopolymer bestehen kann oder ein Ethylencopolymergemisch sein kann, das vorzugsweise aus einer ersten Ethylencopolymerfraktion (A-1) und einer zweiten Ethylencopolymerfraktion (A-2) besteht.

**4.** Uniaxial orientierte mehrschichtige Polyethylenfolie nach einem der vorhergehenden Ansprüche, wobei in dem multimodalen mHDPE

die Polyethylenkomponente (A) einen $MFR_2$ im Bereich von 10 bis 400 g/10min, vorzugsweise 12 bis 200 g/10min, noch bevorzugter 15 bis 100 g/10min und am meisten bevorzugt 20 bis 50 g/10min aufweist und eine Dichte (ISO 1183) im Bereich von 955 bis 970 kg/$m^3$, vorzugsweise 958 bis 968 kg/$m^3$ und noch bevorzugter 960 bis 965 kg/$m^3$ aufweist; und/oder

für den Fall, dass die Polyethylenkomponente (A) aus einer ersten Ethylen-Copolymerfraktion (A-1) und einer zweiten Ethylen-Copolymerfraktion (A-2) besteht, kann der $MFR_2$ und/oder die Dichte der Fraktionen (A-1) und (A-2) gleich sein oder sich voneinander unterscheiden, wobei

die Ethylenpolymerfraktion (A-1) einen $MFR_2$ (190°C, 2,16 kg, ISO 1133) im Bereich von 1,0 bis 500 g/10 min, vorzugsweise von 5,0 bis 200 g/10 min, stärker bevorzugt von 8,0 bis 100 g/10 min und noch bevorzugter von 10,0 bis 50,0 g/10 min aufweist und/oder

eine Dichte (ISO 1183) im Bereich von 945 bis 970 kg/$m^3$, vorzugsweise 950 bis 965 kg/$m^3$ und noch bevorzugter 952 bis 962 kg/$m^3$ aufweist; und/oder

die Ethylenpolymerfraktion (A-2) einen $MFR_2$ (190°C, 2,16 kg, ISO 1133) im Bereich von 10,0 bis 500 g/10 min, vorzugsweise von 15,0 bis 200 g/10 min, noch bevorzugter von 20,0 bis 100 g/10 min und am meisten bevorzugt von 25,0 bis 60,0 g/10 min aufweist und/oder

eine Dichte (ISO 1183) im Bereich von 950 bis 980 kg/$m^3$, vorzugsweise 955 bis 975 kg/$m^3$ und besonders bevorzugt 960 bis 970 kg/$m^3$ aufweist; und/oder

die Polyethylenkomponente (B) einen $MFR_2$ im Bereich von 0,001 bis 0,8 g/10min, vorzugsweise 0,01 bis 0,6 g/10min und besonders bevorzugt 0,03 bis 0,2 g/10min aufweist und/oder

eine Dichte (ISO 1183) im Bereich von 945 bis 965 kg/m$^3$, vorzugsweise 948 bis 962 kg/m$^3$ und besonders bevorzugt 950 bis 960 kg/m$^3$ aufweist.

**5.** Uniaxial orientierte mehrschichtige Polyethylenfolie nach einem der vorhergehenden Ansprüche, wobei das multimodale Ziegler-Nattakatalysierte lineare Polyethylen niedriger Dichte (znLLDPE) umfasst

(A) ein Homopolymer mit niedrigerem Molekulargewicht (LMW) aus Ethylen und
(B) ein Terpolymer mit höherem Molekulargewicht (HMW) aus Ethylen, 1-Buten und 1-Hexen, wobei die LMW-Homopolymerfraktion (A) ein niedrigeres Molekulargewicht aufweist als die HMW-Terpolymerfraktion (B) und

die Fraktion (A) mit niedrigerem Molekulargewicht des znLLDPE einen Schmelzindex $MFR_2$ gemäß ISO 1133 (190°C) im Bereich von 200 bis 1000 g/10min, vorzugsweise von 250 bis 800 g/10min, eine Dichte gemäß ISO 1183 im Bereich von 940 bis 980 kg/m$^3$, vorzugsweise von 945 bis 975 kg/m$^3$, aufweist und die Fraktion (B) mit höherem Molekulargewicht einen niedrigeren $MFR_2$ und eine niedrigere Dichte als die Fraktion (A) mit niedrigerem Molekulargewicht aufweist.

**6.** Uniaxial orientierte, mehrschichtige Polyethylenfolie nach Anspruch 5, wobei das Homopolymer (A) mit niedrigem Molekulargewicht (LMW) aus Ethylen aus zwei Homopolymerfraktionen (A-1) und (A-2) besteht, wobei die Homopolymerfraktion (A-1) vorzugsweise einen $MFR_2$ gemäß ISO 1133 (190°C) im Bereich von 100 bis 400 g/10 min, bevorzugter im Bereich von 150 bis 300 g/10 min aufweist, wohingegen die Homopolymerfraktion (A-2) vorzugsweise einen $MFR_2$ gemäß ISO 1133 (190°C) im Bereich von 450 bis 1200 g/10 min, vorzugsweise im Bereich von 600 bis 1100 g/10 min, aufweist und wobei der $MFR_2$ der Fraktion (A-1) vorzugsweise niedriger ist als der $MFR_2$ des gesamten Ethylen-Homopolymers(A) mit niedrigem Molekulargewicht (LMW) und/oder
die Dichte der beiden Homopolymerfraktionen (A-1) und (A-2) gleich oder unterschiedlich sein kann und im Bereich von 955 bis 980 kg/m$^3$, vorzugsweise 965 bis 980 kg/m$^3$ oder 965 bis 975 kg/m$^3$ liegt.

**7.** Uniaxial orientierte mehrschichtige Polyethylenfolie nach einem der vorhergehenden Ansprüche, wobei das multimodale metallocenkatalysierte lineare Polyethylen niedriger Dichte (mLLDPE) besteht aus

(i) 30,0 bis 70,0 Gew.-%, bezogen auf das mLLDPE, einer Ethylen-1-Buten-Polymerkomponente (A), und
(ii) 70,0 bis 30,0 Gew.-%, bezogen auf das mLLDPE, einer Ethylen-1-Hexen-Polymerkomponente (B);
wobei die Ethylen-1-Buten-Polymerkomponente (A)
eine Dichte im Bereich von 930 bis 955 kg/m$^3$, vorzugsweise von 935 bis 950 kg/m$^3$, besonders bevorzugt von 938 bis 945 kg/m$^3$ aufweist, und
einen $MFR_2$ (190°C, 2,16 kg, ISO 1133) im Bereich von 5,0 bis 300 g/10 min, vorzugsweise von 10,0 bis 200 g/10 min, stärker bevorzugt von 15,0 bis 100 g/10 min, noch bevorzugter von 20,0 bis 80,0 g/10 min und noch stärker bevorzugt von 25,0 bis 50,0 g/10 min aufweist, und
die Ethylen-1-Hexen-Polymerkomponente (B)
eine Dichte im Bereich von 880 bis 915 kg/m$^3$, vorzugsweise von 885 bis 910 kg/m$^3$ und besonders bevorzugt von 888 bis 905 kg/m$^3$ aufweist, und
einen $MFR_2$ (190°C, 2,16 kg, ISO 1133) im Bereich von 0,001 bis 0,1 g/10 min, vorzugsweise von 0,005 bis 0,09 g/10 min, noch bevorzugter von 0,008 bis 0,08 g/10 min und noch stärker bevorzugt von 0,01 bis 0,06 g/10 min aufweist, und/oder
wobei das multimodale metallocenkatalysierte lineare Polyethylen niedriger Dichte (mLLDPE)
eine Dichte im Bereich von 910 bis 925 kg/m$^3$ und besonders bevorzugt von 915 bis 920 kg/m$^3$ aufweist,
einen $MFR_2$ (190°C, 2,16 kg, ISO 1133) im Bereich von 0,1 bis 1,0 g/10 min und bevorzugter von 0,3 bis 0,8 g/10 min aufweist und
ein Verhältnis von $MFR_{21}$ (190°C, 21,6 kg, ISO 1133) zu $MFR_2$ (190°C, 2,16 kg, ISO 1133), $MFR_{21}/MFR_2$, im Bereich von 30 bis 65, vorzugsweise von 35 bis 50 aufweist.

**8.** Uniaxial orientierte mehrschichtige Polyethylenfolie nach Anspruch 7, wobei in dem mLLDPE die Ethylen-1-Buten-Polymerkomponente (A) aus einer Ethylenpolymerfraktion (A-1) und (A-2) besteht, wobei

die Ethylenpolymerfraktionen (A-1) und (A-2) einen $MFR_2$ (190°C, 2,16 kg, ISO 1133) im Bereich von 1,0 bis 300 g/10 min, vorzugsweise von 3,0 bis 200 g/10 min, noch bevorzugter von 5,0 bis 100 g/10 min und noch stärker bevorzugt von 6,0 bis 80,0 g/10 min, wie 8,0 bis 50,0 g/10 min, aufweisen und
die Ethylenpolymerfraktion (A-1) eine Dichte im Bereich von 920 bis 955 kg/m$^3$, vorzugsweise von 925 bis 950 kg/m$^3$, besonders bevorzugt von 930 bis 948 kg/m$^3$, aufweist und

die Ethylenpolymerfraktion (A-2) eine Dichte im Bereich von 930 bis 955 kg/$m^3$, vorzugsweise von 935 bis 950 kg/$m^3$, wie 938 bis 945 kg/$m^3$, aufweist.

9. Uniaxial orientierte mehrschichtige Polyethylenfolie nach einem der vorhergehenden Ansprüche, wobei die Folie eine nach ASTM D1003 an einer 25 μm Prüfblasfolie gemessene Trübung (Haze) von unter 12 %, vorzugsweise im Bereich von 3 bis 11 % und besonders bevorzugt im Bereich von 5 bis 10 % aufweist.

10. Uniaxial orientierte mehrschichtige Polyethylenfolie nach einem der vorhergehenden Ansprüche, wobei die Folie einen Zugmodul (gemessen an einer einschichtigen 25 μm Prüfblasfolie gemäß ISO 527-3) in Maschinenrichtung (MD) im Bereich von >1200 MPa bis 3000 MPa, vorzugsweise von 1500 MPa bis 2500 MPa und besonders bevorzugt von 1700 MPa bis 2200 MPa aufweist.

11. Uniaxial orientierte mehrschichtige Polyethylenfolie nach einem der vorhergehenden Ansprüche, wobei die Folie eine optomechanische Eignung (I) (OMA I) gemäß der Formel:

$$OMA\ I = \frac{Zugmodul\ (MD)[MPa]*Dehnung@\ (MD)(\%)}{Trübung\ (25\ \mu m)[\%]}$$

bestimmt an einer 25 μm Prüfblasfolie von mindestens 9000 [MPa*g/%] bis zu 30000 [MPa*g/%], vorzugsweise im Bereich von 10000 [MPa*g/%] bis zu 25000 [MPa*g/%], besonders bevorzugt im Bereich von 12000 [MPa*g/%] bis zu 20000 [MPa*g/%] aufweist, wobei der Zugmodul und die Dehnung in Maschinenrichtung gemäß ISO 527-3 bei 23°C an 25 μm Prüfblasfolien gemessen werden und die Trübung gemäß ASTM D1003 an einer 25 μm Prüfblasfolie gemessen wird und/oder eine verbesserte optomechanische Fähigkeit (II) (OMA II) gemäß der Formel:

$$OMA\ II = \frac{Zugfestigkeit\ (MD)[MPa]*Dehnung@\ (MD)(\%)}{Trübung\ (25\ \mu m)[\%]}$$

bestimmt an 25 μm Prüfblasfolien von mindestens 1000 [MPa*g/%] bis 3000 [MPa*g/%], vorzugsweise im Bereich von 1200 [MPa*g/%] bis 2500 [MPa*g/%], besonders bevorzugt im Bereich von 1500 [MPa*g/%] bis 2000 [MPa*g/%] aufweist, wobei die Zugfestigkeit und die Dehnung in Maschinenrichtung gemäß ISO 527-3 bei 23°C gemessen werden und die Trübung gemäß ASTM D1003 gemessen wird.

12. Uniaxial orientierte mehrschichtige Polyethylenfolie nach einem der vorhergehenden Ansprüche, wobei die Folie in Maschinenrichtung orientiert ist und/oder eine Dicke im Bereich von 5,0 - 100 μm, wie 10,0 - 75,0 μm, wie etwa 15,0 - 50 μm oder 20,0 - 40,0 μm nach der Orientierung aufweist.

13. Uniaxial orientierte mehrschichtige Polyethylenfolie nach einem der vorhergehenden Ansprüche, **dadurch gekennzeichnet, dass** die Folie aus 2 Hautschichten SKL-1 und SKL-2 und einer Kernschicht (CL) besteht, wobei die Hautschichten SKL-1 und SKL-2 jeweils 10 bis 35 %, vorzugsweise 15 bis 30 % der Gesamtdicke der dreischichtigen Folie ausmachen und die Kernschicht die restliche Dicke, z. B. 30 bis 80 %, vorzugsweise 40 bis 70 % der Gesamtdicke der dreischichtigen Folie ausmacht und/oder wobei die Folie symmetrisch sein kann (wobei die Hautschichten SKL-1 und SKL-2 die gleiche Dicke aufweisen) oder asymmetrisch sein kann, wobei sich die Hautschichten SKL-1 und SKL-2 hinsichtlich ihrer Dicke unterscheiden.

14. Uniaxial orientierte mehrschichtige Polyethylenfolie nach einem der vorhergehenden Ansprüche, wobei die Folie symmetrisch ist, d.h. wobei die beiden Hautschichten SKL-1 und SKL-2 hinsichtlich ihrer Dicke und ihrer Zusammensetzung gleich sind.

15. Verwendung der uniaxial orientierten Polyethylen-Mehrschichtfolie nach einem der vorhergehenden Ansprüche zur Herstellung von Verpackungsartikeln, vorzugsweise ausgewählt aus der Gruppe bestehend aus Tüten, Beuteln, Etiketten oder Deckeln, vorzugsweise für Anwendungen im Bereich der Lebensmittelverpackung.

**Revendications**

1. Film de polyéthylène multicouche à orientation uniaxiale comprenant au moins deux couches (A), étant des couches

de peau (SKL-1 et SKL-2), prenant en sandwich une couche (B), étant une couche centrale (CL), dans lequel (A) les couches de peau (SKL-1 et SKL-2) peuvent être identiques ou différentes et comprendre au moins 90,0 % en poids, sur la base de la couche de peau, d'un polyéthylène haute densité multimodal catalysé par un métallocène (mHDPE),
dans lequel le mHDPE multimodal a une densité (ISO 1183) comprise entre 948 et 970 kg/m$^3$ et un $MFR_2$ (190°C, 2,16 kg, ISO 1133) compris entre 0,1 et 3,0 g/10 min et dans lequel le mHDPE multimodal comprend au moins

(i) 30 à 70 % en poids, par rapport au poids total du mHDPE multimodal, d'un composant polyéthylène (A) ayant une densité (ISO 1183) comprise entre 955 et 980 kg/m$^3$ et un $MFR_2$ (190°C, 2,16 kg, ISO 1133) compris entre 10 et 500 g/10 min ; et
(ii) 30 à 70 % en poids, par rapport au poids total du mHDPE multimodal, d'un composant polyéthylène (B) étant un polyéthylène ayant une densité (ISO 1183) comprise entre 935 et 965 kg/m$^3$ et un $MFR_2$ (190°C, 2,16 kg, ISO 1133) compris entre 0,0001 et 1,0 g/10 min ;

et dans lequel
(B) la couche centrale (CL) comprend :

a) 50,0 % en poids à 80,0 % en poids, sur la base du poids total de la couche centrale (CL), d'un polyéthylène basse densité linéaire multimodal catalysé par Ziegler-Natta (znLLDPE) ayant une densité comprise entre 925 et 950 kg/m$^3$ (ISO 1183) et un $MFR_5$ (190°C, 5 kg, ISO 1133) compris entre 0,1 et 6,0 g/10 min ; et
b) 20,0 % en poids à 50,0 % en poids, sur la base du poids total de la couche centrale (CL), d'un polyéthylène basse densité linéaire multimodal catalysé par un métallocène (mLLDPE) ayant une densité comprise entre 905 et 930 kg/m$^3$ (ISO 1183), un $MFR_2$ (190°C, 2,16 kg, ISO 1133) compris entre 0,01 et 1,5 g/10 min et un rapport entre $MFR_{21}$ (190°C, 21,6 kg, ISO 1133) et $MFR_2$ (190°C, 2,16 kg, ISO 1133), $MFR_{21}/MFR_2$, compris entre 22 et 80.

**2.** Film de polyéthylène multicouche à orientation uniaxiale selon la revendication 1, dans lequel le mHDPE multimodal a

un $MFR_2$ compris entre 0,3 et 2,5 g/10 min, de préférence entre 0,5 et 2,0 g/10 min et plus préférablement entre 0,6 et 1,5 g/10 min et/ou un $MFR_{21}$ (190°C, 21,6 kg, ISO 1133) compris entre 15 et 80 g/10 min, de préférence entre 20 et 60 g/10 min et plus préférablement entre 25 et 40 g/10 min et/ou
un rapport de débit (FRR) du $MFR_{21}/MFR_2$ compris entre au moins 26 et 80, de préférence entre au moins 28 et 70 et plus préférablement entre au moins 30 et 50.

**3.** Film de polyéthylène multicouche à orientation uniaxiale selon la revendication 1 ou 2, dans lequel, dans le mHDPE multimodal, le composant polyéthylène (A) est un copolymère d'éthylène, avec comme comonomère pour le composant polyéthylène (A) du 1-butène, du 1-hexène ou du 1-octène, plus préférablement le 1-butène est utilisé et le composant de polyéthylène (B) est un homopolymère d'éthylène, le composant de polyéthylène (A) pouvant être constitué d'un seul copolymère d'éthylène ou être un mélange de copolymères d'éthylène, de préférence étant constitué d'une première fraction de copolymère d'éthylène (A-1) et d'une deuxième fraction de copolymère d'éthylène (A-2).

**4.** Film de polyéthylène multicouche à orientation uniaxiale selon l'une quelconque des revendications précédentes, dans lequel, dans le mHDPE multimodal,

le composant polyéthylène (A) a un $MFR_2$ compris entre 10 et 400 g/10 min, de préférence entre 12 et 200 g/10 min, plus préférablement entre 15 et 100 g/10 min et le plus préférablement entre 20 et 50 g/10 min et une densité (ISO 1183) comprise entre 955 et 970 kg/m$^3$, de préférence entre 958 et 968 kg/m$^3$ et plus préférablement encore entre 960 et 965 kg/m$^3$; et/ou
dans le cas où le composant de polyéthylène (A) est constitué d'une première fraction de copolymère d'éthylène (A-1) et d'une deuxième fraction de copolymère d'éthylène (A-2), le $MFR_2$ et/ou la densité des fractions (A-1) et (A-2) peuvent être identiques ou différents l'un de l'autre, dans lequel
la fraction de polymère d'éthylène (A-1) a un $MFR_2$ (190°C, 2,16 kg, ISO 1133) compris entre 1,0 et 500 g/10 min, de préférence entre 5,0 et 200 g/10 min, plus préférablement entre 8,0 et 100 g/10 min et encore plus préférablement entre 10,0 et 50,0 g/10 min et/ou
une densité (ISO 1183) comprise entre 945 et 970 kg/m$^3$, de préférence entre 950 et 965 kg/m$^3$ et encore plus préférablement entre 952 et 962 kg/m$^3$; et/ou
la fraction de polymère d'éthylène (A-2) a un $MFR_2$ (190°C, 2,16 kg, ISO 1133) compris entre 10,0 et 500 g/10

min, de préférence entre 15,0 et 200 g/10 min, plus préférablement entre 20,0 et 100 g/10 min et le plus préférablement entre 25,0 et 60,0 g/10 min ; et/ou
une densité (ISO 1183) comprise entre 950 et 980 kg/$m^3$, de préférence entre 955 et 975 kg/$m^3$ et plus préférablement entre 960 et 970 kg/$m^3$; et/ou
le composant polyéthylène (B) a un $MFR_2$ compris entre 0,001 et 0,8 g/10 min, de préférence entre 0,01 et 0,6 g/10 min, et plus préférablement entre 0,03 et 0,2 g/10 min ; et/ou
une densité (ISO 1183) comprise entre 945 et 965 kg/$m^3$, de préférence entre 948 et 962 kg/$m^3$ et plus préférablement entre 950 et 960 kg/$m^3$.

**5.** Film de polyéthylène multicouche à orientation uniaxiale selon l'une quelconque des revendications précédentes, dans lequel le polyéthylène basse densité linéaire multimodal catalysé par Ziegler-Natta (znLLDPE) comprend

(A) un homopolymère d'éthylène de poids moléculaire inférieur (LMW) et
(B) un terpolymère de poids moléculaire plus élevé (HMW) d'éthylène, de 1-butène et de 1-hexène, dans lequel la fraction d'homopolymère LMW (A) a un poids moléculaire plus faible que la fraction de terpolymère HMW (B) et la fraction de poids moléculaire inférieur (A) du znLLDPE a un indice de fusion $MFR_2$ selon ISO 1133 (190°C) compris entre 200 et 1000 g/10min, de préférence entre 250 et 800 g/10 min ; une densité selon ISO 1183 comprise entre 940 et 980 kg/$m^3$, de préférence entre 945 et 975 kg/$m^3$, et la fraction de poids moléculaire supérieur (B) a un $MFR_2$ et une densité inférieure à ceux de la fraction de poids moléculaire inférieur (A).

**6.** Film de polyéthylène multicouche à orientation uniaxiale selon la revendication 5, dans lequel l'homopolymère d'éthylène de poids moléculaire inférieur (LMW) (A) est constitué de deux fractions d'homopolymère (A-1) et (A-2), la fraction d'homopolymère (A-1) ayant de préférence un $MFR_2$ selon ISO 1133 (190°C) compris entre 100 et 400 g/10 min, plus préférablement entre 150 et 300 g/10 min, tandis que la fraction homopolymère (A-2) a de préférence un $MFR_2$ selon ISO 1133 (190°C) compris entre 450 et 1200 g/10 min, plus préférablement entre 600 et 1100 g/10 min et que le $MFR_2$ de la fraction (A-1) est de préférence inférieur au $MFR_2$ de l'homopolymère total de poids moléculaire inférieur (LMW) de l'éthylène (A) et/ou
la densité des deux fractions d'homopolymère (A-1) et (A-2) peut être identique ou différente et comprise entre 955 et 980 kg/$m^3$, de préférence entre 965 et 980 kg/$m^3$ ou entre 965 et 975 kg/$m^3$.

**7.** Film de polyéthylène multicouche à orientation uniaxiale selon l'une quelconque des revendications précédentes, dans lequel le polyéthylène basse densité linéaire multimodal catalysé par un métallocène mLLDPE) est constitué de

(i) 30,0 à 70,0 % en poids, sur la base du mLLDPE, d'un composant polymère éthylène-1-butène (A), et
(ii) 70,0 à 30,0 % en poids, sur la base du mLLDPE, d'un composant polymère d'éthylène-1-hexène (B) ;
le composant polymère éthylène-1-butène (A) présentant :
une densité comprise entre 930 et 955 kg/$m^3$, de préférence entre 935 et 950 kg/$m^3$, plus préférablement entre 938 et 945 kg/$m^3$, et un $MFR_2$ (190°C, 2,16 kg, ISO 1133) compris entre 5,0 et 300 g/10 min, de préférence entre 10,0 et 200 g/10 min, plus préférablement entre 15,0 et 100 g/10 min, encore plus préférablement entre 20,0 et 80,0 g/10 min et encore plus préférablement entre 25,0 et 50,0 g/10 min, et
le composant polymère éthylène-1-hexène (B) ayant
une densité comprise entre 880 et 915 kg/$m^3$, de préférence entre 885 et 910 kg/$m^3$ et plus préférablement entre 888 et 905 kg/$m^3$, et un $MFR_2$ (190°C, 2,16 kg, ISO 1133) compris entre 0,001 et 0,1 g/10 min, de préférence entre 0,005 et 0,09 g/10 min, plus préférablement entre 0,008 et 0,08 g/10 min et encore plus préférablement entre 0,01 et 0,06 g/10 min, et/ou
le polyéthylène basse densité linéaire multimodal catalysé par un métallocène (mLLDPE) présentant :

une densité comprise entre 910 et 925 kg/$m^3$ et plus préférablement entre 915 et 920 kg/$m^3$,
un $MFR_2$ (190°C, 2,16 kg, ISO 1133) compris entre 0,1 et 1,0 g/10 min et plus préférablement entre 0,3 et 0,8 g/10 min et
un rapport entre le $MFR_{21}$ (190°C, 21,6 kg, ISO 1133) et le $MFR_2$ (190°C, 2,16 kg, ISO 1133), $MFR_{21}/MFR_2$, compris entre 30 et 65, de préférence entre 35 et 50.

**8.** Film de polyéthylène multicouche à orientation uniaxiale selon la revendication 7, dans lequel, dans le mLLDPE, le composant polymère éthylène-1-butène (A) est constitué d'une fraction de polymère éthylène (A-1) et (A-2), de sorte que

les fractions de polymère d'éthylène (A-1) et (A-2) ont un $MFR_2$ (190°C, 2,16 kg, ISO 1133) compris entre 1,0

et 300 g/10 min, de préférence entre 3,0 et 200 g/10 min, plus préférablement entre 5,0 et 100 g/10 min et encore plus préférablement entre 6,0 et 80,0 g/10 min, comme entre 8,0 et 50,0 g/10 min et
la fraction de polymère d'éthylène (A-1) a une densité comprise entre 920 et 955 kg/$m^3$, de préférence entre 925 et 950 kg/$m^3$, plus préférablement entre 930 et 948 kg/$m^3$, et
la fraction de polymère d'éthylène (A-2) a une densité comprise entre 930 et 955 kg/$m^3$, de préférence entre 935 et 950 kg/$m^3$, comme entre 938 et 945 kg/$m^3$.

**9.** Film de polyéthylène multicouche à orientation uniaxiale selon l'une quelconque des revendications précédentes, dans lequel le film présente un haze mesuré selon la norme ASTM D1003 sur un film soufflé de test de 25 μm inférieur à 12 %, de préférence compris entre 3 et 11 % et plus préférablement compris entre 5 et 10 %.

**10.** Film de polyéthylène multicouche à orientation uniaxiale selon l'une quelconque des revendications précédentes, dans lequel le film a un module de traction (mesuré sur un film soufflé d'essai monocouche de 25 μm selon la norme ISO 527-3) dans le sens machine (MD) compris entre >1200 MPa et 3000 MPa, de préférence entre 1500 MPa et 2500 MPa et plus préférablement entre 1700 MPa et 2200 MPa.

**11.** Film de polyéthylène multicouche à orientation uniaxiale selon l'une quelconque des revendications précédentes, dans lequel le film présente une capacité optomécanique (I) (OMA I) selon la formule :

$$OMA\ I = \frac{Tensile\ Modulus\ (MD)[MPa] * Elongation@\ (MD)(\%)}{Haze\ (25\ \mu m)[\%]}{}^{1}$$

déterminée sur un film soufflé d'essai de 25 μm d'au moins 9000 [MPa*g/%] à 30000 [MPa*g/%], de préférence compris entre 10000 [MPa*g/%] et 25000 [MPa*g/%], plus préférablement compris entre 12000 [MPa*g/%] et 20000 [MPa*g/%], dans lequel le module de traction et l'allongement dans le sens machine sont mesurés conformément à la norme ISO 527-3 à 23°C sur des films soufflés d'essai de 25 μm et le haze est mesuré conformément à la norme ASTM D1003 sur un film soufflé d'essai de 25 μm et/ou une capacité optomécanique améliorée (II) (OMA II) selon la formule :

$$OMA\ II = \frac{Tensile\ Strength\ (MD)[MPa] * Elongation@\ (MD)(\%)}{Haze\ (25\ \mu m)[\%]}{}^{1}$$

déterminée sur un film soufflé test de 25 μm d'au moins 1000 [MPa*g/%] à 3000 [MPa*g/%], de préférence compris entre 1200 [MPa*g/%] et 2500 [MPa*g/%], plus préférablement compris entre 1500 [MPa*g/%] et 2000 [MPa*g/%], la résistance à la traction et l'allongement dans le sens machine étant mesurés selon la norme ISO 527-3 à 23°C et le haze étant mesuré selon la norme ASTM D1003.
[1] Tensile strength = résistance à la traction; élongation = allongement

**12.** Film de polyéthylène multicouche à orientation uniaxiale selon l'une quelconque des revendications précédentes, dans lequel le film est orienté dans le sens machine et/ou a une épaisseur comprise entre 5,0 et 100 μm, comme 10,0 et 75,0 μm, comme 15,0 et 50 μm ou 20,0 et 40,0 μm après l'orientation.

**13.** Film multicouche de polyéthylène à orientation uniaxiale selon l'une quelconque des revendications précédentes, dans lequel le film est constitué de 2 couches de peau SKL-1 et SKL-2 et d'une couche centrale (CL), les couches de peau SKL-1 et SKL-2 formant chacune de 10 à 35 %, de préférence de 15 à 30 % de l'épaisseur totale du film à 3 couches, et la couche centrale formant l'épaisseur restante, par exemple 30 à 80%, de préférence 40 à 70% de l'épaisseur totale du film à 3 couches et/ou le film peut être symétrique, les couches de peau SKL-1 et SKL-2 ayant la même épaisseur, ou asymétrique, les couches de peau SKL-1 et SKL-2 étant différentes du point de vue de leur épaisseur.

**14.** Film multicouche de polyéthylène à orientation uniaxiale selon l'une quelconque des revendications précédentes, dans lequel le film est symétrique, c'est-à-dire dans lequel les deux couches de peau SKL-1 et SKL-2 sont identiques du point de vue de l'épaisseur et de leur composition.

**15.** Utilisation du film de polyéthylène multicouche à orientation uniaxiale selon l'une quelconque des revendications précédentes pour la production d'articles d'emballage préférablement choisis dans le groupe constitué par les sacs,

les sachets, les étiquettes ou les couvercles, de préférence pour des applications liées à l'emballage alimentaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019108326 A
- WO 2018071250 A
- WO 2017207221 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- WO 2016198273 A
- WO 2021009189 A
- WO 2021009190 A
- WO 2021009191 A
- WO 2021009192 A
- WO 03066698 A
- WO 2008034630 A
- EP 688794 A
- WO 9951646 A
- WO 0155230 A
- EP 299750 A
- EP 1378528 A1


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253